# EUROPÄISCHE PATENTSCHRIFT

(11) **EP 2 795 108 B1**
(45) Veröffentlichungstag und Bekanntmachung des Hinweises auf die Patenterteilung: **11.04.2018**
(21) Anmeldenummer: 12810211.8
(22) Anmeldetag: 17.12.2012
(51) Int. Cl.: F03D 13/10, F03D 80/00, F03D 9/25, F03D 1/06

(54) **WINDENERGIEANLAGENGONDEL**
WIND TURBINE NACELLE
NACELLE D'ÉOLIENNE

(30) Priorität: 21.12.2011 DE 102011089431; 03.09.2012 DE 102012215605
(43) Veröffentlichungstag der Anmeldung: 29.10.2014
(73) Patentinhaber: Wobben Properties GmbH, 26607 Aurich (DE)
(72) Erfinder: RÖER, Jochen, 27777 Ganderkesee (DE); SARTORIUS, Florian, 26789 Leer (DE)
(74) Vertreter: Eisenführ Speiser
(86) Internationale Anmeldenummer: PCT/EP2012/075820
(87) Internationale Veröffentlichungsnummer: WO 2013/092502

(56) Entgegenhaltungen:
- WO-A1-2007/008884
- US-A1- 2005 082 836
- US-A1- 2007 102 934
- US-A1- 2007 222 227
- US-A1- 2007 274 838
- US-A1- 2008 164 700
- US-A1- 2011 171 026

## Beschreibung

Die vorliegende Erfindung betrifft eine Gondel einer Windenergieanlage.

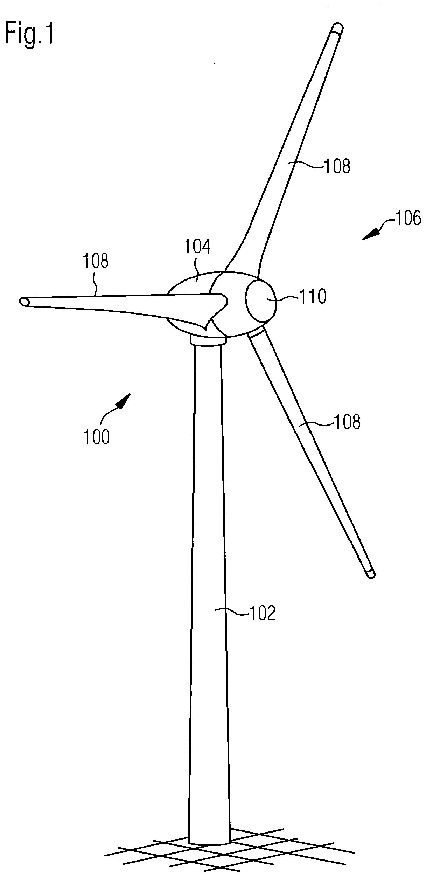

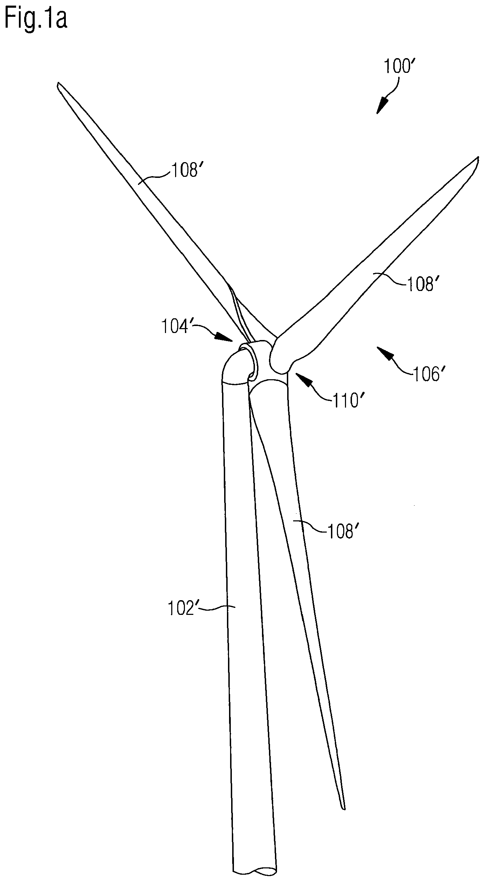

Windenergieanlagen sind allgemein bekannt. Bei einer typischen Windenergieanlage, wie sie in Fig. 1 gezeigt ist, wird ein aerodynamischer Rotor (106) vom Wind gedreht und erzeugt dadurch mittels eines Generators elektrische Energie. Ein solcher Generator und weitere zum Betrieb der Windenergieanlage benötigten Elemente sind in einer Gondel untergebracht. Zu den weiteren Elementen kann beispielsweise eine Anlagensteuerung gehören, so wie Azimutantriebe und deren Ansteuerung, ggf. Gleichrichter oder Frequenzwechselrichter und deren Ansteuerung und Heizungen oder Kühlungen und deren Ansteuerung, um nur einige Beispiele zu nennen. Die elektrischen Einrichtungen sind dabei überwiegend in entsprechenden Schaltschränken untergebracht, die in der Gondel angeordnet sind. Darüber hinaus sind Wege- und Standbereiche vorzusehen, damit Servicepersonal die Gondel betreten und Wartungen, Untersuchungen oder Instandsetzungen vornehmen können. All diese Einrichtungen sind in der Gondel angeordnet und durch eine Gondelverkleidung insbesondere gegen Wind und Regen geschützt. Die Gondelverkleidung umschließt hierbei sämtliche Geräte im Grunde vollständig und wird dabei an einer Gondelstruktur getragen, die auch die Wege- und Standbereiche und anderen Einrichtungen trägt.

Bei einer getriebelosen Windenergieanlage nimmt zudem der Generator einigen Platz in Anspruch. Beispielsweise beträgt der Luftspaltdurchmesser einer Enercon E126 etwa 10 m. Etwas kleinere Typen haben aber zumindest häufig einen Luftspaltdurchmesser von etwa 5 m. Dabei kann der Generator mit seinem Stator an einem Maschinenträger getragen werden. An dem Maschinenträger ist zudem ein Achszapfen befestigt, der über Lager den Generatorrotor trägt, der auch als Läufer bezeichnet werden kann.

Ein solcher Maschinenträger kann aufgrund seiner Größe, je nach Art und Größe der Windenergieanlage, erheblichen Raum in der Gondel in Anspruch nehmen, wobei verhältnismäßig wenig Platz um den Maschinenträger herum verbleibt.

Darüber hinaus ist der Maschinenträger häufig am Azimutlager an dessen gesamtem Umfang befestigt, so dass die Gondel vom Turm und damit durch das Azimutlager hindurch nur durch den Maschinenträger hindurch erreicht werden kann.

Das Deutsche Patent- und Markenamt hat folgenden Stand der Technik recherchiert: DE 10 2006 035 721 A1, DE 10 2009 056 245 A1 und EP 1 356 204 B1. Das Dokument US-A-2007/0222227 wird als nächstliegender Stand der Technik angesehen. Der vorliegenden Erfindung liegt somit die Aufgabe zugrunde, wenigstens eines der oben genannten Probleme zu adressieren. Insbesondere soll der Gondelaufbau einer Windenergieanlage verbessert werden. Zumindest soll eine alternative Lösung vorgeschlagen werden.
Erfindungsgemäß wird somit eine Gondel einer Windenergieanlage gemäß Anspruch 1 vorgeschlagen. Eine solche Gondel weißt eine Gondelverkleidung auf, die nämlich im Wesentlichen die Außenhülle der Gondel darstellt. Es wird vorgeschlagen, dass diese Gondelverkleidung selbsttragend ausgebildet ist. Hierdurch werden zunächst einmal Stützstrukturen innerhalb der Gondel vermieden. Dabei vereinfacht sich insoweit auch der Aufbau der Gondel und stützende Quer- oder Diagonalstreben zum Stützen der Gondelverkleidung werden innerhalb der Gondel vermieden und dadurch kann zusätzlicher Platz in der Gondel geschaffen werden bzw. kann zu anderer Verwendung bereitstehen.
Vorzugsweise ist die Gondel so gestaltet, dass die Gondelverkleidung unmittelbar oder allenfalls über Befestigungsmittel an dem Azimutlager der Windenergieanlage befestigt ist. Insbesondere werden so auf die Gondelverkleidung wirkende Kräfte von der Gondelverkleidung direkt in das Azimutlager und von da aus weiter in den Turm ggf. Mast der Windenergieanlage eingeleitet. Diese Kräfte beinhalten zumindest die Gewichtskräfte der Gondelverkleidung und insbesondere auch auf die Gondelverkleidung wirkende Windkräfte und/oder Gewichtskräfte und ggf. dynamische Kräfte der an der Gondelverkleidung befestigten Einrichtungen und/oder Gewichtskräfte und dynamische Kräfte des Generators der Windenergieanlage, mit dem elektrische Energie aus dem Wind erzeugt wird. Vorzugsweise werden auch Kräfte des aerodynamischen Rotors, nämlich auf diesen wirkende Gewichtskräfte, aus seiner Bewegung resultierende Kräfte und abgeleitete Windkräfte von der Gondelverkleidung aufgenommen und über das Azimutlager abgeleitet.
Gemäß einer Ausgestaltung wird vorgeschlagen, dass die Gondelverkleidung den Generator trägt. Somit werden die Elemente Maschinenträger und Gondelverkleidung, wie sie bisher bekannt waren, zu einer neuen Komponente zusammengefasst, die als Gondelträger bezeichnet wird. Der Gondelträger nimmt somit im Wesentlichen die Form einer Gondelverkleidung an, bildet nämlich die Außenhülle der Gondel und ist dabei aber so stabil ausgebildet, dass er die Tragfähigkeit eines ansonsten vorzusehenden Maschinenträgers aufweist. Insbesondere wird er aus einem Material und einer Materialstärke gebildet, die diese Tragfähigkeit gewährleistet. Es wird somit auf einen speziellen Träger oder eine spezielle Tragkonstruktion für den Generator verzichtet und dieser wird stattdessen an der Gondelverkleidung befestigt. Die Gondelverkleidung trägt somit den Generator und übernimmt vorzugsweise im Wesentlichen die Funktion eines Maschinenträgers für den Generator. Die Gondel weist somit, abgesehen von der Gondelverkleidung, keinen Maschinenträger auf, der den Generator der Windenergieanlage trägt. Die Gondel weist nun anstelle eines im Wesentlichen innen in der Gondel angeordneten Maschinenträgers, an dem der Generator bisher befestigt war und um den herum weitere Einrichtungen befestigt waren, nun eine so kräftig und stabil und steif ausgebildete Außenhülle auf, die die Funktion eines Maschinenträgers übernimmt und die zu tragenden Teile umschließt.

Hierdurch hat eine solche tragende Gondelverkleidung gegenüber eines bisherigen, in einer Gondel drinnen angeordneten Maschinenträgers wesentlich größere Außenabmessungen. Dadurch ist es möglich, durch eine solche tragende Gondelverkleidung im Vergleich zu einem bisherigen, innen liegenden Maschinenträger gleiche Stabilität und Steifigkeit bei signifikant geringeren Materialstärken zu realisieren. Zudem ergibt sich bei gleichen Außenabmessungen wesentlich mehr verfügbarer Raum im Inneren der vorgeschlagenen selbsttragenden Gondelverkleidung gegenüber dem Inneren einer nicht selbsttragenden Gondelverkleidung, die zumindest einen Maschinenträger in sich aufnehmen muss.

Gemäß einer bevorzugten Ausgestaltung wird vorgeschlagen, dass die Windenergieanlage derart getriebelos ist, dass der Läufer ohne mechanische Übersetzung von dem aerodynamischen Rotor gedreht wird. Bei einer solchen getriebelosen Windenergieanlage ist üblicherweise ein entsprechend großer, langsam drehender Generator vorgesehen. Die Nenndrehzahl kann im Bereich von 5 bis 25 Umdrehungen pro Minute liegen, insbesondere im Bereich von 10 bis 20 Umdrehungen pro Minute, weiter bevorzugt im Bereich von 12 bis 14 Umdrehungen pro Minute. Insbesondere ist der Generator als Ringgenerator ausgebildet, bei dem die magnetisch wirksamen Elemente des Stators und Läufers im Wesentlichen jeweils in einem Ring entlang des Luftspalts angeordnet sind. Üblicherweise ist ein solcher Generator hochpolig mit Polpaarzahlen von wenigstens 24, insbesondere wenigstens 48, wenigstens 72 oder wenigstens 192.

Insbesondere ist ein solcher Generator vergleichsweise schwer und kann über 10 t, insbesondere über 50 t, insbesondere über 70 t Gewicht aufweisen. Ein solches hohes Gewicht kann erfindungsgemäß durch die vorgeschlagene Selbsttragende Gondelverkleidung getragen werden, indem die Kräfte über eine entsprechend starke äußere Struktur abgeleitet werden. Die Gondelverkleidung ist insoweit ein tragendes Teil und kann auch als Gondelmantel bezeichnet werden. Gemäß der Erfindung weist die Gondelverkleidung einen drehenden Teil und einen stehenden Teil auf. Der drehende Teil trägt das wenigstens eine, insbesondere die drei Rotorblätter des aerodynamischen Rotors. Dabei bildet der drehende Teil der Gondelverkleidung den sogenannten Spinner des aerodynamischen Rotors und bildet dabei einen Teil des aerodynamischen Rotors. Außerdem, zumindest aber alternativ dazu, trägt der drehende Teil der Gondelverkleidung den Läufer des Generators in dem Sinne, dass der Läufer fest mit dem drehenden Teil der Gondelverkleidung verbunden ist und zumindest die Gewichtskräfte des Läufers sowie weitere im Betrieb auftretende mechanische vom Läufer ausgehende Kräfte aufnimmt. Vorzugsweise bildet der Läufer zumindest einen Tragabschnitt des Läufers, einen Teil des drehenden Teils der Gondelverkleidung.
Der stehende Teil trägt den Stator des Generators. Dabei ist wenigstens ein Rotorlager vorgesehen, mittels dessen sich der drehende Teil der Gondelverkleidung und damit auch der Läufer des Generators relativ zum stehenden Teil der Gondelverkleidung und damit relativ zum Stator dreht. Vorzugsweise sind Läufer und Stator in der Nähe dieses Rotorlagers bzw. in der Nähe eines der Rotorlager angeordnet, um sich nur durch einen geringen Luftspalt voneinander getrennt gegeneinander drehen zu können. Über das Rotorlager bzw. über die mehreren Rotorlager wird dabei der drehende Teil der Gondelverkleidung von dem stehenden Teil der Gondelverkleidung getragen. Über das bzw. die Rotorlager trägt der stehende Teil der Gondelverkleidung dabei den drehenden Teil der Gondelverkleidung mit dem Läufer des Generators und mit dem einen oder den mehreren Rotorblättern sowie weiteren, an dem drehenden Teil der Gondelverkleidung angeordnete Einrichtungen, wie beispielsweise Pitchmotoren. Die hierdurch über das bzw. die Rotorlager auf den stehenden Teil übertragenen Kräfte werden auch von dem stehenden Teil letztlich über ein Azimutlager oder ähnliches insbesondere direkt vom stehenden Teil auf das Azimutlager abgeleitet. Insoweit ist unter dem stehenden Teil der Gondelverkleidung zu verstehen, dass dieser in Bezug auf die Drehbewegung des Rotors steht. Hinsichtlich einer Azimutbewegung, also einer Windnachführung, ist auch der stehende Teil beweglich, nämlich auf dem genannten Azimutlager beweglich gelagert.

Vorzugsweise ist der Generator, insbesondere im Falle der getriebelosen Windenergieanlage, als Außenläufer ausgebildet. Demnach dreht sich der Läufer außen um den dazu radial nach innen angeordneten Stator, mit dazwischen liegendem Luftspalt. Eine solche Ausgestaltung ist besonders vorteilhaft für einen Generator, der einen etwa ringförmigen Läufer aufweist, der prinzipbedingt vom Luftspalt aus eine geringere radiale Ausdehnung aufweist, als der zugehörige Stator, der vorzugsweise ebenfalls ein Ringstator sein kann. In diesem Falle kann ein Generator gebaut werden, der gegenüber einem Innenläufer einen größeren Luftspaltdurchmesser bei gleichem Außendurchmesser aufweisen kann.

In diesem Fall und auch in anderen Fällen kann der Läufer von der tragenden Gondelverkleidung von außen aufgenommen und stabil getragen werden. Besonders günstig arbeitet eine solche Konstruktion mit einem fremderregten Synchrongenerator zusammen, bei dem durch einen Gleichstrom ein magnetisches Feld im Läufer erzeugt wird. Insbesondere hierdurch kann der Läufer warm werden und durch die Aufnahme in der außen herum liegenden Gondelverkleidung kann hierüber zumindest ein Teil der Wärme auf einfache Weise nach außen abgeleitet werden. Beispielsweise durch Wärmeleitung, durch die selbsttragende Gondelverkleidung.

Vorzugsweise ist die gesamte tragende Gondelverkleidung, zumindest aber ein Teil des drehenden Teils und/oder ein Teil des stehenden Teils, als Gussteil, insbesondere als Sphärogussteil ausgebildet oder aus wenigen Sphärogussteilen zusammengesetzt. Insbesondere Teile der Gondelverkleidung, die weniger Tragkräfte aufweisen müssen, wie beispielsweise ein dem Rotor abgewandtes Heckteil bzw. Heckverkleidung, können aus einem anderen Material wie beispielsweise Aluminium gefertigt sein. Die Verwendung eines Sphärogussteils begünstigt Wärmeleitung und kann insoweit insbesondere bei Verwendung mit einem Außenläufer die Abführung von Wärme aus dem Außenläufer begünstigen. Es können auch ein oder mehrere Schweißteile verwendet werden.

Gemäß einer vorteilhaften Ausführung wird vorgeschlagen, dass die Gondel mit einem Zahnkranz mit Innenverzahnung zur Azimutverstellung der Gondel versehen ist. Dieser Zahnkranz ist fest mit der Gondel verbunden und weist eine Innenverzahnung auf, in die ein oder mehrere Azimutantriebe jeweils mit einem Ritzel eingreifen können, um hierdurch die Gondel dem Wind nach zu führen. Bei diesem Vorschlag sind somit Azimutantriebe ortsfest im Turm oder ggf. Mast angeordnet und führen die Windnachführung dadurch aus, dass der Zahnkranz mit Innenverzahnung entsprechend um eine im Wesentlichen vertikale Achse gedreht wird. Der Zahnkranz ist fest mit der Gondel verbunden, die sich somit entsprechend mit dreht.

Hierdurch kann gegenüber bisher üblichen Varianten, in denen die Azimutantriebe in der Gondel untergebracht sind, weiterer Platz in der Gondel geschaffen werden. Weiterhin ist eine gleichmäßige Verteilung der Azimutantriebe in Umfangsrichtung möglich. Es können die Azimutantriebe in gleichmäßigen Winkelabständen verteilt werden, z.B. können 12 Azimutantriebe so gleichmäßig verteilt werden, dass alle 30° ein Azimutantrieb angeordnet wird. Hierdurch wird eine gleichmäßige Krafteinleitung in den Zahnkranz gewährleistet, wodurch sich die Belastung auf das Azimutlager und damit dessen Verschleiß verringern lässt.

Gemäß einer Ausführungsform wird vorgeschlagen, dass die Gondel eine durch den Generator hindurch verlaufende Arbeitsplattform aufweist. Die Gondel ist demnach so ausgebildet, dass Bereiche vor und hinter dem Generator und somit auch Bereich zum aerodynamischen Rotor hin mit ein und derselben Arbeitsplattform erreicht werden können. Diese Arbeitsplattform ist somit dauerhaft installiert und ist von einer Person begehbar. Vorzugsweise kann sie auch im laufenden Betrieb der Anlage auf ihrer gesamten Strecke begangen werden.

Weiterhin wird vorgeschlagen, dass die Gondel für eine Windenergieanlage vorgesehen ist, die einen Generator mit einer Nennleistung von mehr als 1 MW aufweist. Dies unterstreicht die Art der Gestaltung der Gondel als eine selbsttragende Gondel in dem Sinne, dass schwere Rotorblätter und Generatorelemente getragen werden können. Eine Gondelkonstruktion für eine Windenergieanlage mit einer Nennleistung von 1 MW oder mehr weist eine Größe auf, die konkrete Stabilitätsvoruntersuchungen für die Tragstruktur erforderlich machen. Solche Stabilitätsuntersuchungen kann der Fachmann ausführen, wenn er Informationen über die Grundstruktur dieser Gondel hat, wie sie beispielsweise den Figuren entnehmbar ist. Für kleinere, insbesondere deutlich kleinere Windenergieanlagen spielen solche Fragen der Stabilität und Steifigkeit der Grundstruktur aus vielerlei Gründen eine untergeordnete Rolle. Hierzu gehört, dass ein kleinerer Generator kompakter ausgebildet sein kann und damit eine Grundsteifigkeit des Generators vorliegt, die grundsätzlich keiner weiteren Unterstützung bedarf. Zudem weisen kleinere Windenergieanlagen geringere Gewichte und geringere Rotorblattlängen und Rotorblattflächen auf, wodurch sich auch eine auf die Rotorblätter wirkende Windkraft reduziert. Dadurch werden geringere Kräfte für etwaige Tragstrukturen benötigt, wodurch diese Tragstrukturen wiederum schwächer und damit leichter ausgebildet werden können. Weiterhin bestehen für kleinere Windenergieanlagen grundsätzlich keinerlei Transportprobleme. Transportprobleme entstehen nämlich insbesondere durch bestimmte Maximalausmaße, die durch das Straßensystem vorgegeben und damit von Windenergieanlagenhersteller praktisch unbeeinflussbar sind. So ist beispielsweise ein Außendurchmesser eines Generators von 5 m eine kritische Größe, über die für einen Straßentransport häufig nicht hinausgegangen werden kann. Kleinere Windenergieanlagen kennen solche Probleme durch transportierbare Maximalgrößen nicht.

Vorzugsweise ist die Gondel begehbar. Das bedeutet, dass die Gondel so groß ist, dass eine ausgewachsene Person ungebückt in der Gondel gehen kann. Hierbei geht diese Person innerhalb der Tragstruktur, nämlich innerhalb der tragenden Gondelverkleidung. Hierin unterscheidet sich die vorgeschlagene Gondel ganz wesentlich auch von kleinen Windenergieanlagen, bei denen mitunter zwischen einem Maschinenträger und einer Gondel schwer unterschieden werden kann. Insbesondere Windenergieanlagen, die zu Wartungszwecken von außen erreicht werden, fallen insoweit in eine gänzlich andere Kategorie.

Gemäß einer Ausführungsform ist die Gondel dadurch gekennzeichnet, dass zwischen einem Achszapfenabschnitt und dem Turm ein den Achszapfenabschnitt mit dem Turm verbindender Verbindungsabschnitt vorhanden ist, der eine vom Turm zum Achszapfenabschnitt gebogene oder abgewinkelte Außenform aufweist. Insbesondere ist eine etwa um 90° gebogene oder um 90° abgewinkelte, rohrförmige Form vorgesehen. Der Nabenabschnitt ist im Bereich des Generators und aerodynamischen Rotors angeordnet und zum Tragen des Generators und des aerodynamischen Rotors vorgesehen. Das kann über wenigstens ein oder zwei Lager erfolgen. Der Achszapfenabschnitt kann beispielsweise als Konusabschnitt oder konusförmiger Abschnitt, insbesondere als ein vorderer Konusabschnitt vorgesehen sein. Dieser Achszapfenabschnitt kann dabei eine im Wesentlichen waagerechte Mittelachse aufweisen, die mit einer Drehachse des aerodynamischen Rotors und/oder des Läufers übereinstimmen kann.

Der Verbindungsabschnitt ist somit im Wesentlichen rohrförmig ausgebildet, wobei dieses Rohr bzw. diese Rohrform insbesondere etwa um 90° gebogen oder abgewinkelt ist. Diese rohrförmige Form bzw. dieser rohrförmige Verbindungsabschnitt weist dabei vorzugsweise an einer Seite einen ringförmigen Turmanschlussbereich und an seinem anderen Ende einen ringförmigen Achszapfenanschlussbereich auf. Diese beiden ringförmigen Anschlussbereiche, die etwa in 90° zueinander angeordnet sind, verbindet dieser rohrförmige Verbindungsabschnitt und verbindet damit den Turm mit dem Achszapfenabschnitt.

Gemäß einer Ausführungsform wird vorgeschlagen, dass der drehende Teil Blattanschlüsse aufweist zum Befestigen jeweils eines Rotorblattes an dem drehenden Teil. Dieser Nabenteil ist insbesondere der beschriebene drehende Teil der Gondel bzw. ist ein Abschnitt dieses drehenden Teils der Gondel. Die Blattanschlüsse erstrecken sich in axialer Richtung, nämlich bezogen auf die Drehachse des aerodynamischen Rotors, die vorzugsweise mit der Drehachse des Generators übereinstimmt, über einen Blattanschlussbereich, der auch als axialer Blattanschlussbereich bezeichnet werden kann. Innerhalb dieses Blattanschlussbereichs oder axialen Blattanschlussbereichs erstreckt sich auch der Generator in axialer Richtung. Dabei kann der Generator in axialer Richtung auch kürzer sein als der axiale Blattanschlussbereich. Jedenfalls wird vorgeschlagen, dass sich der Generator in axialer Richtung nicht vor oder hinter dem Blattanschluss befindet. Dadurch wird ein Kraftfluss von dem aerodynamischen Rotor auf den Läufer und schließlich über das magnetische Feld auch auf den Stator verbessert oder sogar optimiert. Insbesondere wird ein Kraftfluss vermieden, der von den Rotorblättern kommend von den Blattanschlüssen teilweise in axialer Richtung zum Läufer fließen muss.
Die Blattanschlüsse können übrigens auch als Blattanschlussadapter ausgebildet sein bzw. mit solchen verbunden sein. In diesem Fall wird jeweils ein Rotorblatt zunächst an einem Blattanschlussadapter befestigt sein und dieser Blattanschlussadapter würde dann an dem Blattanschluss befestigt sein. Der Blattanschlussadapter bildet hierbei insbesondere etwa einen kurzen rohrförmigen Abschnitt, nämlich im Vergleich zu seinem Umfang eine kurze Länge.
Außerdem oder alternativ wird vorgeschlagen, dass der Generator in Bezug auf die Drehachse in radialer Richtung innerhalb der Blattanschlüsse angeordnet ist. Die Blattanschlüsse und damit die Rotorblätter umgeben somit den Generator.
Insbesondere wird somit eine Ausgestaltung vorgeschlagen, bei der bei einem Generator als Außenläufer der Außenläuferteil der Rotornabe wird und direkt innerhalb der Blattanschlüsse bzw. Nabenadapteranschlüsse sitzt. Der Stator, der entsprechend innen liegt, wird zu einem Teil des Achszapfenabschnitts der Gondel. Dieser Teil ist erfindungsgemäß als vorderer Konusabschnitt an der Gondel ausgebildet. Der Stator wird somit zu einem Teil eines Achszapfens bzw. des Achszapfenabschnitts der selbsttragenden Gondel, der einem Achszapfen entspricht. Insbesondere liegt hier auch eine Integration von Generator und Blattanschlussbereich vor.

Hierdurch kann u.a. erreicht werden, möglichst wenig Bauteile und entsprechend möglichst wenig Gewicht zu benötigen, was wiederum zu einer Kostensenkung führen kann. Zu viele Einzelteile, eine montageaufwändige zusätzliche Verkleidung und ein unnötiger Materialaufwand durch ungünstigen Kraftfluss im Antriebsstrang können vermieden werden. Stattdessen wird eine Vereinfachung der Montage, Reduktion der Einzelteile auf der Baustelle und eine möglichst direkte Krafteinleitung vom Rotorblatt in den Generator erreicht oder lässt sich dadurch zumindest anstreben. Außerdem kann auch eine etwaige zusätzliche Gondelhaube überflüssig werden, wenn der Blattanschlussbereich den Generator auch baulich so umschließt, dass der Generator dadurch ausreichend eingekapselt und gegen Witterungseinflüsse geschützt ist.

Insbesondere dann, wenn der Generator eine sehr lange Bauform aufweist und eine größere axiale Länge aufweist als der Blattanschlussbereich, kann sich der Generator in axialer Richtung auch zu wenigstens einer Seite über den Blattanschlussbereich hinaus erstrecken. Zudem wird eine Windenergieanlage mit einem Turm oder Mast und einer Gondel gemäß einer der oben beschriebenen Ausführungsformen vorgeschlagen. Günstig ist es, wenn eine solche Windenergieanlage wenigstens einen Azimutantrieb aufweist, insbesondere mehrere Azimutantriebe aufweist, die fest im Turm bzw. Mast angeordnet sind und mit jeweils einem Ritzel an einem mit der Gondel fest verbundenen, eine Innenverzahnung aufweisenden Zahnkranz angreifen. Hierdurch wird eine robuste und mit verhältnismäßig geringem Aufwand aufbaubare Windenergieanlage vorgeschlagen.

Ebenfalls wird ein Verfahren zum Aufbau einer Windenergieanlage vorgeschlagen, insbesondere zum Aufbauen einer oben beschriebenen Windenergieanlage. Hierbei wird vorgeschlagen, dass Läufer und Stator des Generators bereits vor dem Anheben zur Installation auf einem Turm mittels eines Lagers miteinander verbunden sind. Es wird somit ein Aneinandermontieren von Läufer und Stator in hoher Höhe der Gondel auf dem Turm vermieden und stattdessen eine werksseitige Vorfertigung vorgeschlagen und/ oder eine Vorfertigung auf der Baustelle am Boden.

Vorzugsweise sind bereits elektrische Einrichtungen in der Gondel vorinstalliert, bevor diese zur Montage auf dem Turm gehoben wird. Auch hierdurch kann eine Montage vereinfacht werden und zudem werden hierdurch auch Fehlerquellen bei der Montage minimiert.

Nachfolgend wird die Erfindung beispielhaft anhand von Ausführungsformen unter Bezugnahme auf die beiliegenden Figuren näher erläutert.
- Fig. 1: zeigt vereinfacht eine Windenergieanlage in einer perspektivischen Ansicht.
- Fig. 1a: zeigt vereinfacht eine erfindungsgemäße Windenergieanlage in einer perspektivischen Ansicht.
- Fig. 2: zeigt eine erfindungsgemäße Gondel schematisch in einer perspektivischen Schnittansicht.
- Fig. 3: zeigt eine Gondel wie in Fig. 2 aber zum Teil in einer Explosionsdarstellung, gemäß der Aufbaukomponenten beim Aufbau einer Windenergieanlage.
- Fig. 4: zeigt einen vergrößerten Ausschnitt eines vorderen Teils der Gondel der Fig. 2.
- Fig. 5: zeigt ein Segment eines Teils der in den Fig. 2 und 3 veranschaulichten Gondel, das zum Befestigen eines Rotorblattes vorgesehen ist.
- Fig. 6: zeigt einen Ausschnitt einer Gondel gemäß der Fig. 2, nämlich einen Blattanschluss zum Befestigen eines Rotorblattes.
- Fig. 7: zeigt einen Ausschnitt der in den Fig. 2 und 3 gezeigten Gondel im Bereich eines Teils des in der Gondel aufgenommenen Generators.
- Fig. 8: zeigt eine Gondel in einer perspektivischen Außenansicht.
- Fig. 9: entspricht der Darstellung der Fig. 2, wobei zusätzlich ein Maschinenträger gemäß dem Stand der Technik schematisch eingezeichnet ist, zum Erläutern eines Unterschiedes zu einer früheren Lösung.
- Fig. 10: zeigt eine erfindungsgemäße Gondel einer weiteren Ausführungsform schematisch in einer seitlichen Schnittansicht.
- Fig. 11: zeigt eine erfindungsgemäße Gondel einer weiteren Ausführungsform schematisch in einer seitlichen Schnittansicht.
- Fig. 12: zeigt die Gondel der Fig. 11 in einer perspektivischen Ansicht.
- Fig. 13a bis 13d: zeigen verschiedene Ausführungsformen eines Gondelbogenbereichs der Gondel.
- Fig. 14: vergleicht zur Veranschaulichung vorhandenen Platzangebots eine bisher bekannte Gondel mit einer erfindungsgemäßen Gondel gleicher Leistungsklasse.
- Fig. 15: zeigt eine erfindungsgemäße Gondel in einer Seitenansicht zur Veranschaulichung eines Kühlluftstroms.
- Fig. 16: zeigt eine Ausführungsform einer erfindungsgemäßen Gondel in einer perspektivischen Schnittansicht.
- Fig. 17: zeigt die Ausführungsform der Fig. 16 in einer perspektivischen, ungeschnittenen Ansicht.

Nachfolgend können identische Bezugszeichen ähnliche aber nicht identische Elemente zeigen. Außerdem können gleiche Elemente in unterschiedlichem Maßstab dargestellt sein.

Fig. 1 und 1a zeigen jeweils eine Windenergieanlage 100, 100'mit einem Turm 102, 102' und einer Gondel 104, 104'. An der Gondel 104, 104' ist ein Rotor 106, 106' mit drei Rotorblättern 108, 108' und einem Spinner 110, 110' angeordnet. Der Rotor 106, 106' wird im Betrieb durch den Wind in eine Drehbewegung versetzt und treibt dadurch einen Generator in der Gondel 104, 104' an.

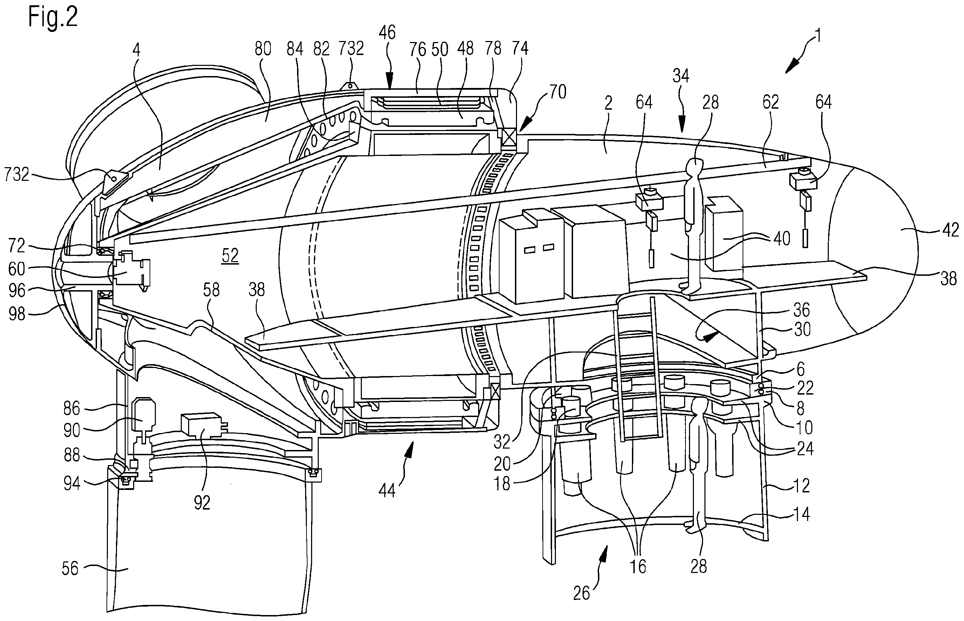

Die Gondel 1 der Fig. 2 weist einen stehenden Teil 2 und einen drehenden Teil 4 auf. Der stehende Teil 2 erstreckt sich weit in den drehenden Teil 4 hinein. Der stehende Teil 2 ist über einen Azimutflansch 6 an einem Azimutlager 8 befestigt, das wiederum an einem Turmflansch 10 eines Turms 12 befestigt ist. Von dem Turm 12 ist nur sein oberer Bereich, nämlich sein Turmkopf 26 mit einer Arbeitsplattform 14 dargestellt.

In dem Turm 12 in der Nähe des Turmflansches 10 und in der Nähe des Azimutlagers 8 sind Azimutantriebe 16 angeordnet. Die Azimutantriebe 16 verfügen jeweils über ein nur angedeutetes Ritzel 18, das an einen Zahnkranz 20 mit Innenverzahnung angreift. Die Innenverzahnung ist nicht weiter dargestellt. Der Zahnkranz 20 kann mit einem inneren Lagerring 22 des Azimutlagers 8 verbunden sein und ist dadurch oder auf andere Weise mit dem Azimutflansch 6 und dadurch mit der Gondel 1, nämlich mit dem stehenden Teil 2 der Gondel 1 fest verbunden. Die Azimutantriebe 16, die in zwei Ringscheiben 24 im Turm 12 fest installiert sind, können somit die Gondel 1 durch eine entsprechende Azimutverstellung dem Wind nachführen.

Die Ringscheiben 24 sind auf Höhe des Turmflansches 10 fest installiert und führen dadurch auch zu einer hohen Steifigkeit des Turms 12 in dem gezeigten Turmkopf 26. Die dargestellten Personen 28 veranschaulichen die Größenverhältnisse im Turmkopf 26 und auch in der Gondel 1.

Über einen rohrförmigen Tragabschnitt 30, der auch zur Versteifung und Stabilisierung der Gondel 1 dient, ist der stehende Teil 2 der Gondel 1 mit dem beschriebenen Azimutflansch 6 am Azimutlager 8 und damit am Turmkopf 26 befestigt. Über diesen rohrförmigen Tragabschnitt 30 werden somit auch Kräfte, die auf die Gondel 1 wirken, in den Turm 12 abgeleitet. Vom Turm 12 aus kann eine Person 28 beispielsweise über eine Leiter 32 die Gondel 1 durch die Ringscheiben 24, das Azimutlager 8 und den rohrförmigen Tragabschnitt 30 hindurch erreichen. Alle diese Elemente bieten ausreichend Platz, dass eine Person 28 in die Gondel 1 gelangen kann und auch, dass Gegenstände aus dem Turm 12 in die Gondel 1 gelangen können.

Der stehende Teil 2 der Gondel 1 weist einen rohrförmigen Gürtelbereich 34 auf. In einem Verbindungsbereich 36, der im mathematischen Sinne einen Schnittbereich des rohrförmigen Tragabschnitts 30 und des rohrförmigen Gürtelbereichs 34 bildet, sind der rohrförmige Tragabschnitt 30 und der rohrförmige Gürtelbereich 34 fest miteinander verbunden. Der rohrförmige Tragabschnitt 30 und der rohrförmige Gürtelbereich 34 können auch, zumindest abschnittsweise, aus einem Stück gefertigt sein, wie beispielsweise als ein Gussteil. Der Verbindungsbereich 36 verläuft dreidimensional im Raum und kann dadurch verschiedenste Kraftrichtungen aus der Gondel 1 aufnehmen und in den Turm 12 ableiten.

Vom Turm 12 aus kommend endet der rohrförmigen Tragabschnitts 30 auf Höhe einer Plattform 38. Die Plattform 38 dient im Wesentlichen dazu, dass eine Person, insbesondere Servicepersonal die Gondel 1 betreten und dort arbeiten kann. Außerdem sind Geräte wie beispielsweise Steuerschränke 40 für unterschiedliche Zwecke auf der Plattform 38 angeordnet. Ergänzend kann die Plattform 38 auch zur Erhöhung der Stabilität und insbesondere Steifigkeit der Gondel 1 beitragen. Auf der Plattform 38 können sich Personen in der Gondel in weiten Teilen und mit viel Raumangebot bewegen.

Die Gondel 1 weist einen hinteren Abschnitt 42 auf, der bestimmungsgemäß dem Wind abgewandt ist. Dieser hintere Abschnitt 42 kann zur Stabilität und insbesondere Steifigkeit der Gondel 1 beitragen, nimmt ansonsten aber weniger mechanische Kräfte auf, als der rohrförmige Tragabschnitt 30 und der rohrförmige Gürtelbereich 34. Aus diesem Grunde kann der hintere Abschnitt 42 beispielsweise auch von seiner Materialstärke her oder von seiner Materialart her schwächer ausgebildet sein. Beispielsweise wird die Verwendung von Aluminium für diesen hinteren Abschnitt 42 vorgeschlagen.

Nach vorne schließt sich an den Gürtelbereich 34 ein Generatorabschnitt 44 an. In dem Generatorabschnitt 44 ist der Generator 46 angeordnet. Der Generator 46 umfasst einen Stator 48 und einen Läufer 50, der als Außenläufer ausgebildet ist, also außen um den Stator 48 herum angeordnet ist. Sowohl der Stator 48 als auch der Läufer 50 sind etwa ringförmig ausgebildet. Der Stator 48 ist fest mit dem stehenden Teil 2 der Gondel 1 verbunden. Hierdurch wird der Stator 48, der eine vergleichsweise große Masse und somit großes Gewicht aufweist, von dem stehenden Teil 2 und damit von der Gondel 1 getragen. Durch die eingezeichnete Person 28 wird deutlich, dass die Größenverhältnisse es ohne weiteres zulassen, dass eine Person auf der Plattform 38 bis zum Generator 46 und durch diesen hindurchgehen kann. Die Plattform 38 grenzt dabei im Grunde nur an Elemente des stehenden Teils 2 an und somit ist ein solches Begehen auch im laufenden Betrieb der Windenergieanlage möglich.

An den Generatorabschnitt 44 des stehenden Teils 2 schließt sich ein vorderer Abschnitt 52 an, der auch als vorderer Konusabschnitt 52 bezeichnet werden kann. Dieser Konusabschnitt 52 ersetzt im Grunde einen bisher bekannten Achszapfen. Der vordere Konusabschnitt 52, der Teil des stehenden Teils 2 der Gondel 1 ist, befindet sich im Bereich des aerodynamischen Rotors 54, der drei Rotorblätter 56 aufweist, von denen nur eines im Ansatz dargestellt ist. Der vordere Konusabschnitt 52 weist benachbart zur Plattform 38 eine Wartungsöffnung 58 auf, durch die eine Person vom stehenden Teil 2 in den drehenden Teil 4 und insbesondere zum Rotorblatt 56 bzw. in zugeordnete Einrichtungen gelangen kann.

Von dem vorderen Konusabschnitt 52 ist zudem ein Schleifringkörper 60 zugänglich, der dazu dient, elektrische Signale, seien es nun Informationssignale oder Energiesignale, vom stehenden Teil 2 zum drehenden Teil 4 oder umgekehrt zu übertragen. Weiterhin ist in der Gondel 1 und damit im stehenden Teil 2 eine Kranschiene 62 angeordnet, die vom hinteren Abschnitt 42 bis zum vorderen Konusabschnitt 52 und dort bis zum Schleifringkörper 60 verläuft. Die Kranschiene 62 trägt eine elektrische Winde 64 zum Handhaben schwerer Gegenstände, einschließlich Werkzeug, die in zwei Positionen gezeigt ist. Die Winde 64 kann im Grunde bis zum Schleifringkörper 60 entlang der Kranschiene 62 verschoben werden und somit beispielsweise Lasten im Turm 12 heben und zum vorderen Konusabschnitt 52 und dort beispielsweise zum Rotorblatt 56 befördern.

Der drehende Teil 4 der Gondel 1 ist mittels eines hinteren Lagers 70 und eines vorderen Lagers 72 drehbar um eine im Wesentlichen horizontale Achse auf dem stehenden Teil 2 gelagert. Das hintere Lager 70 ist in der Nähe des Generators 46 etwa benachbart zum Stator 48 angeordnet. An dem drehenden Teil 4 ist im Bereich des hinteren Lagers 70 eine Abdeckschürze 74 vorgesehen, die das hintere Lager 70 vor Witterungseinflüssen schützt.

Von einem den Läufer 50 tragenden und im Sinne eines Zylindermantels umschließenden Läufermantelabschnitt 76 erstreckt sich eine ringförmige Tragstruktur 78 zum hinteren Lager 70. Hierdurch wird der drehende Teil 4 der Gondel 1 in diesen hinteren Bereich des drehenden Teils 4 auf dem hinteren Lager 70 getragen.

An den Läufermantelabschnitt 76 schließt sich ein Nabenabschnitt 80 an. Dieser Nabenabschnitt 80 ist an dem Läufermantelabschnitt 76 befestigt und in diesem Bereich ist auch eine Bremsscheibe 82 vorgesehen, die mittels der Bremsmittel 84 den Läufer 50 festsetzen kann, was insbesondere für Wartungstätigkeiten erforderlich sein kann. An dem Nabenabschnitt 80 sind Rotorblattansätze 86 mit jeweils einem Blattanschluss 88 zum Befestigen jeweils eines Rotorblattes 56 angeordnet. In dem Rotorblattansatz 86 ist ein Pitchantrieb 90 mit jeweils einer zugehörigen Pitchkiste 92 angeordnet. Eine solche Pitchkiste 92 wird zum Betrieb der Pitchmotoren verwendet und kann Ansteuereinheiten und/oder Energiespeicher für eine Notverstellung oder anderes beinhalten. Die Pitchkiste 92 ist hier exemplarisch für weitere Module zum Ansteuern oder Versorgen der Pitschantriebe dargestellt. Hierdurch kann ein Anstellwinkel des Rotorblattes 56 verändert werden und dazu ist das Rotorblatt 56 über ein Blattlager 94 drehbar an dem Blattanschluss 88 gelagert. In anderen Ausführungen können auch mehrere Pitchantriebe für jedes Rotorblatt vorgesehen sein.

In dem vorderen Lager 72 ist der drehende Teil 4 der Gondel 1 mit Hilfe eines Lagerstutzens 96 in dem vorderen Lager 72 aufgenommen. Somit ist der drehende Teil 4 mit seinem Lagerstutzen 96 in dem vorderen Lager 72 innen gelagert und der stehende Teil 2 ist hier von außen mit den vorderen Lager 72 verbunden. Der Lagerstutzen 96 des drehenden Teils 4 ist somit im Bereich des vorderen Lagers 72 innerhalb des stehenden Teils 2 angeordnet, wohingegen ansonsten der drehende Teil 4 außen um den stehenden Teil 2, insbesondere um den vorderen Konusabschnitt 52 und den Generatorabschnitt 44 dreht. Hierdurch wird eine Austauschbarkeit des vorderen Lagers 72 vom Innenraum des stehenden Teils 2 der Gondel 1 aus möglich. Für eine solche Austauschtätigkeit kann auch die Kranschiene 62 hilfreich sein.

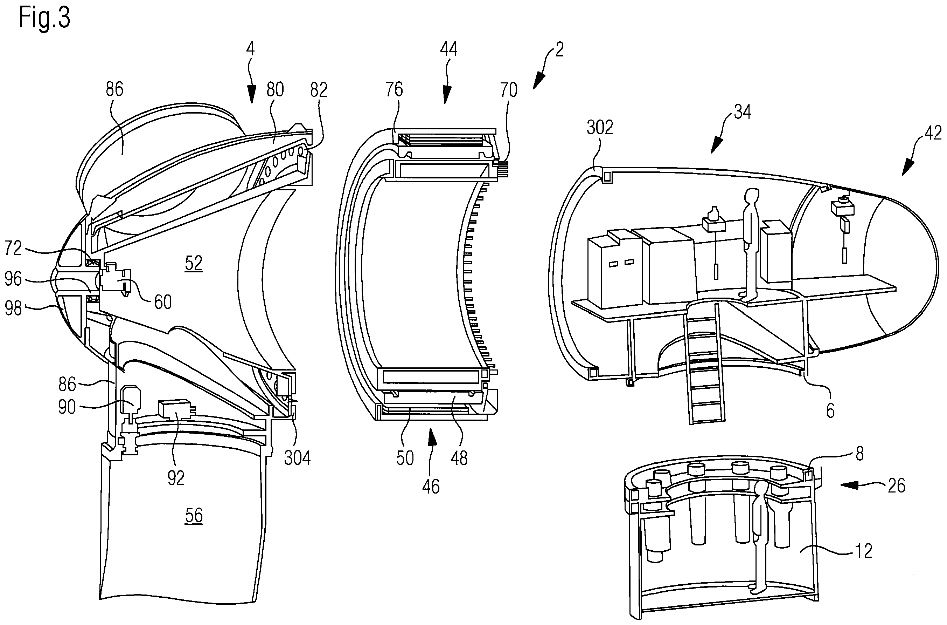

Fig. 3 veranschaulicht die Zusammensetzung einiger Gondelteile und das Aufsetzen der Gondel 1 auf den Turm 12. Ein Verfahren zum Errichten einer Windenergieanlage kann dabei so aussehen, dass der Gürtelbereich 34 des stehenden Teils 2 ggf. zusammen mit dem hinteren Abschnitt 42 auf den Turm 12 im Bereich seines Turmkopfes 26 aufgesetzt wird. Hierzu wird der Azimutflansch 6 des stehenden Teils 2 auf den Turmkopf 26 im Bereich des Azimutlagers 8 bzw. auf das Azimutlager 8 aufgesetzt und dort befestigt.

Als nächster wesentlicher Schritt kann der Generatorabschnitt 44 zusammen mit dem Generator 46, nämlich dem Läufer 50 und dem Stator 48 und zusammen mit dem hinteren Lager 70, die hierzu vorinstalliert sind, wie die Fig. 3 zeigt, in dem Gürtelbereich 34 befestigt werden. Hierzu wird das hintere Lager 70 an einem ringförmigen Gürtelflansch 302 angeordnet und befestigt.

In einem weiteren wesentlichen Schritt kann der vordere Konusabschnitt 52 des stehenden Teils zusammen mit dem Nabenabschnitt 80 des drehenden Teils montiert werden. Dazu wird der vordere Konusabschnitt 52 an dem Generatorabschnitt 44 und der Nabenabschnitt 80 am Läuferabschnitt 76 befestigt. Hierzu weist jedes dieser 4 Abschnitte einen entsprechenden Ringflansch auf. Der Nabenabschnitt 80 des drehenden Teils 4 kann mit dem vorderen Konusabschnitt 52 des stehenden Teils 2 zusammen mit dem vorderen Lager 72 vor dem Heben auf Turmkopfhöhe vorinstalliert sein. Dazu können Hilfsbefestigungen beispielsweise im Bereich der Bremsscheibe 82 vorgesehen sein, um den Nabenabschnitt 80 und den vorderen Konusabschnitt 52 zueinander zu fixieren.

Je nach Größe der Windenergieanlage und damit Größe der Gondel und je nach verfügbarem Aufbaukran kann dieser vorinstallierte Nabenabschnitt 80 mit vorderem Konusabschnitt 52 mit oder ohne Rotorblättern 56 oder ggf. mit Rotorblattteilen gehoben werden. In dem Nabenabschnitt 80 und/oder dem vorderen Konusabschnitt 52 können Einrichtungen vorinstalliert sein, wie der Schleifringkörper 60, die Pitchantriebe 90 und die Pitchkisten 92. Es können einige oder alle dieser oder weitere Einrichtungen vorinstalliert sein.

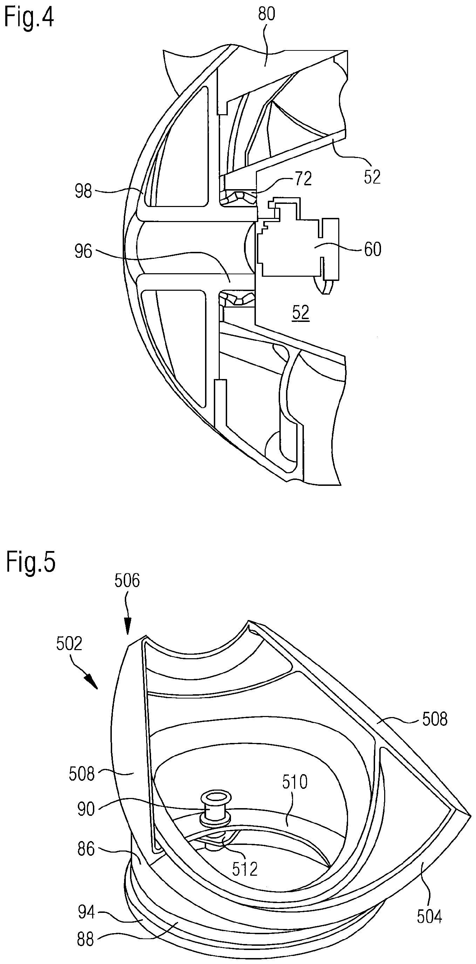

Fig. 4 zeigt einen Ausschnitt eines vorderen Teils des Nabenabschnitts 80 des drehenden Teils und des vorderen Konusabschnitts 52 des stehenden Teils. Zu erkennen ist hier insbesondere die Aufnahme des vorderen Lagers 72, das hier als zweireihiges Kegelrollenlager ausgebildet ist. Der Nabenabschnitt 80 weist eine Nabenkappe 98 auf, die auch als Spinnerkappe 98 bezeichnet werden kann und die zu dem Nabenabschnitt 80 als separates Teil gefertigt sein kann und dann an dem Nabenabschnitt 80 befestigt wird. Die Nabenkappe 98 beinhaltet auch den Lagerstutzen 96, der von innen in dem vorderen Lager 72 gelagert ist.

Die Fig. 4 zeigt zudem schematisch und ohne Einzeichnung der angeschlossenen Leitung - die auch zur besseren Übersichtlichkeit ansonsten in den Darstellungen nicht gezeigt sind - den Schleifringkörper 60. Dieser ist von dem Innenraum des vorderen Konusabschnitts, der ein stehendes Teil bildet, leicht zugänglich und kann für Wartungsarbeiten oder Instandsetzungsarbeiten entfernt werden.

Ist dieser Schleifring körper 60 entfernt, kann das vordere Lager 72 zum Innenraum des vorderen Konusabschnitts 52 hin herausgenommen und somit getauscht werden. Hierzu wären der Nabenabschnitt 80, insbesondere der Lagerstutzen 96 relativ zum vorderen Konusabschnitt 52 zu fixieren.

Der Nabenabschnitt 80, der ganz oder teilweise in den Figuren 2 bis 4 gezeigt ist, kann in einer Ausführungsform aus drei im Grunde gleichen Nabensegmenten 502 zusammengesetzt sein. Ein solches Nabensegment 502 ist in der Fig. 5 gezeigt. Der Nabenabschnitt 80 weist zur Befestigung an dem Läufermantelabschnitt 76, was in den Fig. 2 und 3 gezeigt ist, einen ringförmigen Nabenflansch 304 auf. Zur Verbindung mit der Nabenkappe 98 ist ein Kappenflansch 306 vorgesehen. Das Nabensegment 502, das in Fig. 5 verdeutlicht und separat dargestellt ist, weist einen Nabenflanschabschnitt 504 und einen Kappenflanschabschnitt 506 auf. Weiterhin sind zwei Segmentflansche 508 gezeigt, die zum Verbinden der Nabensegmente 502 untereinander vorgesehen sind. Somit können drei Nabensegmente 502 mittels der Segmentflansche 508 zu dem Nabenabschnitt 18 verbunden werden. Hierbei setzen sich die Nabenflanschabschnitte 504 zu dem Nabenflansch 304 insgesamt zusammen. Ebenfalls setzen sich die Kappenflanschabschnitte 506 zu dem Kappenflansch 306 zusammen.

Das Nabensegment 502 weist zudem einen Rotorblattansatz 86 auf, der einen Blattanschluss 88 aufweist. An dem Blattanschluss 88 ist ein Blattlager 94 befestigt.

In dem Rotorblattansatz 86 ist ein ringförmig umlaufender Verstärkungssaum 510 vorgesehen, in dem der Pitchantrieb 90 eingesetzt ist. Der Pitchantrieb 90 wird außerdem von einem Aufnahmevorsprung 512 gehalten. Durch diese doppelte Befestigung für den Pitchantrieb 90 kann dieser stabil angeordnet werden. Sowohl der Verstärkungssaum 510 als auch der Aufnahmevorsprung 512 sind in dem Rotorblattansatz 86 und damit in dem Nabenabschnitt 80 angeordnet. Hierdurch kann eine Vorinstallation des Pitchantriebs 90 ermöglicht oder erleichtert werden.

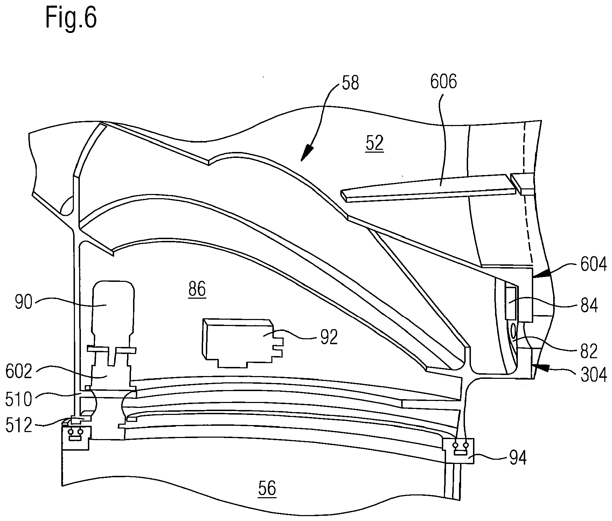

Der vergrößerten Darstellung der Fig. 6 ist insbesondere ein Rotorblattansatz 86 in größerem Detail zu entnehmen. Der Pitchantrieb 90 ist mit einem Getriebeabschnitt 602 in dem Verstärkungssaum 510 und dem Aufnahmevorsprung 512 eingesetzt und insbesondere an dem Verstärkungssaum 510 befestigt. Der Aufnahmevorsprung 512 kann insbesondere eine Kippstabilität für den Pitchantrieb 90 erhöhen. Der Pitchantrieb 90 kann im Falle eines Stromausfalls mittels der Pitchkiste 92 mit Stellenergie versorgt werden, um das Rotorblatt 56 in eine Fahnenstellung zu drehen. Verbindungsleitungen sind in dieser Darstellung der Fig. 6 nicht dargestellt, obwohl sie natürlich zwischen dem Pitchantrieb 90 und der Pitchkiste 92 vorhanden sind. Das Blattlager 94, mit dem das Rotorblatt 56 an dem Rotorblattansatz 86 drehbar gelagert ist, ist als Doppelkugellager oder zweireihiges Kugellager ausgebildet.

Die Fig. 6 lässt zudem die Bremsscheibe 82 mit dem Bremsmittel 84 erkennen. Das Bremsmittel 84 ist an dem vorderen Konusabschnitt 52 im Bereich eines ringförmigen Flansches 604 befestigt, der auch als ringförmiger Konusflansch 604 bezeichnet werden kann. Das Bremsmittel 84 mit Bremsscheibe 82 ist zum Bremsen und Arretieren des Rotors vorgesehen.

In dem Konusabschnitt 52 kann ein vorderer Plattformabschnitt 606 als Teil der Plattform 38 angeordnet und an dem vorderen Konusabschnitt 52 befestigt sein. Durch die Wartungsöffnung 58 in dem vorderen Konusabschnitt 52 kann ein Servicemitarbeiter von dem vorderen Plattformabschnitt 606 zum und in den Rotorblattansatz 86 und von dort aus auch zum und in das Rotorblatt 56 gelangen. Hierzu ist jedoch zuvor die Bremsscheibe 82 in dem Bremsmittel 84 festzusetzen und auch eine Arretierung vorzunehmen, um ein Rotieren des drehenden Teils und damit eine Bewegung des Rotorblattansatzes 86 zu vermeiden.

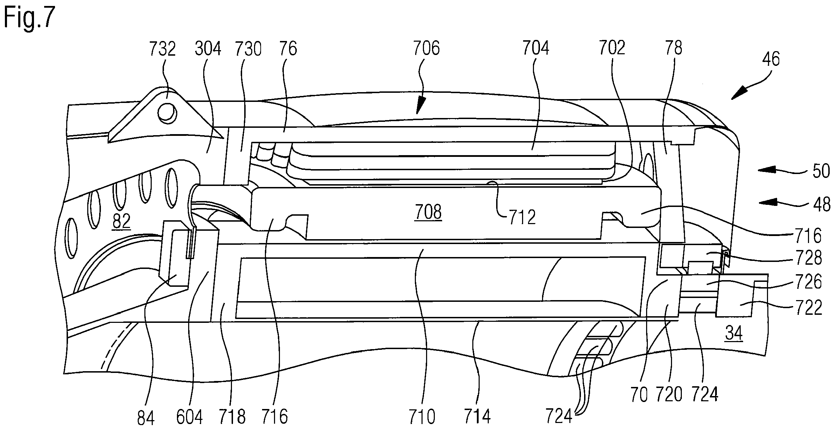

Fig. 7 veranschaulicht Aufbau und Anordnung des Generators 46 in einem vergrößerten Ausschnitt. Der Generator 46 weist einen Stator 48 und einen Läufer 50 auf. Der Läufer kann auch als Rotor des Generators bezeichnet werden. Zur besseren Differenzierung gegenüber dem aerodynamischen Rotor wird der Rotor 50 des Generators 46 als Läufer 50 bezeichnet.

Der Läufer 50 weist diverse Pole mit jeweils einem Polschuh 702 auf. Der Pol oder Polschuhkörper, von dem nur der Polschuh 702 in der Fig. 7 zu erkennen ist, ist mit einer Polschuhwicklung 704 versehen, die zur Fremderregung des Polschuhkörpers und damit des Läufers 50 insgesamt mit einem Gleichstrom beaufschlagt wird, der im Übrigen über den Schleifringkörper 60 zu führen ist, der in den Fig. 2 bis 4 angedeutet ist. Der Läufer 50, insbesondere sein Polschuhkörper, ist an dem Läufermantelabschnitt 76 fest befestigt. Zur Kühlung des Läufers sind Außenrippen 706 vorgesehen. Diese können auf den Läufermantelabschnitt 76 aufgebracht sein oder der Läufermantelabschnitt 76 wird zusammen mit diesen Außenrippen 706 gefertigt. Vorteilhafterweise ist der Läufermantelabschnitt 76, die Außenrippen 706 als auch der Polschuhkörper jedes Pols des Läufers 50 jeweils aus Metall oder zumindest einem anderen Material gefertigt, das eine gute Wärmeleitfähigkeit aufweist. Hierdurch kann die Wärme des Läufers 50 in den Läufermantelabschnitt 76 geleitet und über die Außenrippen 706 nach außen abgegeben werden. Die Außenrippen 706 sind insbesondere bei Ausrichtung der Gondel 1 zum Wind etwa Längs zum Wind angeordnet, damit der Wind an den Außenrippen 706 entlang streichen und für einen entsprechenden Kühleffekt sorgen kann. Alternativ können die Außenrippen auch schraubenförmig um den Läufer 50 herum angeordnet sein, um besser dem durch die Rotorblätter abgelenkten Wind zu entsprechen.

Der Stator 48 weist im Wesentlichen ein Statorblechpaket 708 auf, das fest an einem Statortragabschnitt 710 befestigt ist. Das Statorblechpaket 708 wird mit Wicklungen versehen, insbesondere mit einer durchgängigen Wicklung und insbesondere mit einer 6-phasigen, nämlich zweimal 3-phasig durchgängigen Wicklung, die in der Fig. 7 aber der Übersichtlichkeit halber nicht eingezeichnet ist. Statorwicklungen sind lediglich schematisch angedeutet durch die dargestellten Wicklungsköpfe 716. Zwischen den Polschuhen 702 und dem Statorblechpaket 708 ist der Generatorluftspalt 712 ausgebildet. Der Stator 48 erstreckt sich vom Luftspalt 712 radial nach innen und durch den vorgeschlagenen Aufbau besteht in diese Richtung keine nennenswerte räumliche Begrenzung. Hierdurch ergibt sich eine gute Zugänglichkeit und der Raum kann dabei beispielsweise für Kühlvorrichtungen verwendet werden, je nachdem was für ein Kühlbedarf besteht. Zudem kann der Raum ggf. zur Erhöhung der Stabilität des Stators 48 genutzt werden.

Die gezeigte Ausführung des Läufers 50 und des Stators 48 gibt grundsätzlich einen charakteristischen Größenbedarf für den Läufer und Stator wieder. Es ist zu erkennen, dass die radiale Ausdehnung des Läufers 50, nämlich vom Luftspalt 712 bis einschließlich zum Läufermantelabschnitt 76 deutlich geringer ist als die radiale Ausdehnung des Stators 48 vom Luftspalt 712 bis zu einem Abdeckblech 714 des Stators 48. Bei einem gegebenen maximalen Außendurchmesser, der beispielsweise transportbedingt vorgegeben sein kann, lässt sich somit durch die gezeigte Konstellation als Außenläufer ein größerer Durchmesser für den Luftspalt 712 realisieren, als wenn unter Beachtung desselben Außendurchmessers der Stator, der eine größere radiale Dicke aufweist, außen läge.

Der Statortragabschnitt 710 ist mittels eines vorderen Statorflansches 718 an dem Konusflansch 604 befestigt bzw. der Konusflansch 604 ist an dem vorderen Statorflansch 718 befestigt. Zum Gürtelbereich 34 des stehenden Teils 2 hin weist der Statortragabschnitt 710 einen hinteren Statorflansch 720 auf, mit dem der Statortragabschnitt 710 an einem vorderen Gürtelbereichflansch 722 befestigt ist. Hierzu sind eine Vielzahl von Verbindungsbolzen 724 vorgesehen. Zwischen den beiden Flanschen, nämlich dem hinteren Statorflansch 720 und dem vorderen Gürtelbereichsflansch 722 ist das hintere Lager 70 mit einem stehenden Lagerabschnitt 726 aufgenommen. Durch Trennung des hinteren Statorflansches 720 von dem Gürtelbereichsflansch 722 kann das hintere Lager 70 grundsätzlich entnommen werden.

An dem drehenden Lagerteil 728 des hinteren Lagers 70 ist der Läufermantelabschnitt 76 über die ringförmige gitterähnliche Tragstruktur 78 fest verbunden. Der Läufermantelabschnitt 76 ist zudem über den Läufermantelflansch 730 mit dem Nabenflansch 304 verbunden. Zum Heben sind zudem Hebeösen 732 vorgesehen. Solche Hebeösen 732 können grundsätzlich an jedem Nabensegment 520 angeordnet sein. Es kann aber ausreichend sein, nur ein Paar Hebeösen 732 vorzusehen, so dass nur an einem Nabensegment 502 ein Paar Hebeösen 732 angeordnet ist. Aus diesem Grunde zeigt das Nabensegment 502 der Fig. 5 keine Hebeöse 732.

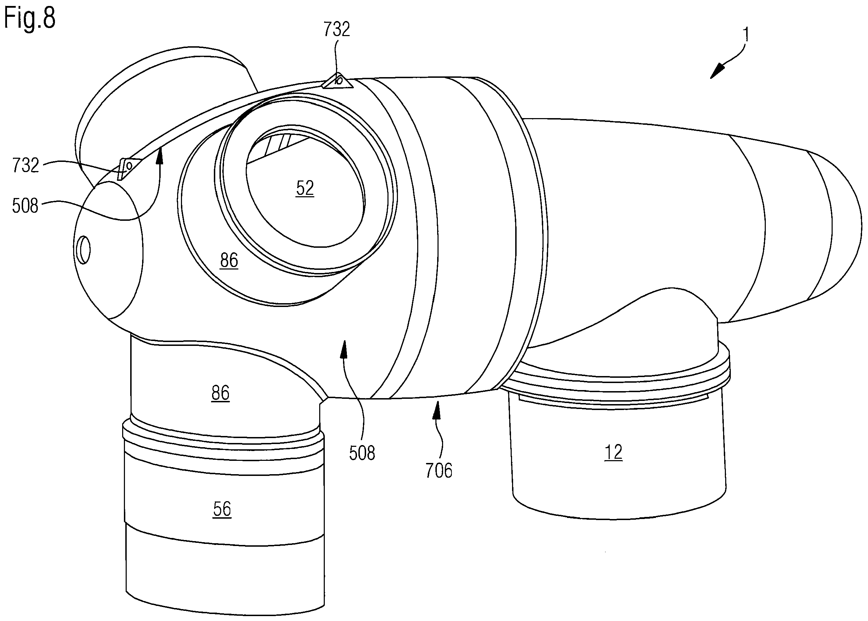

Fig. 8 zeigt eine Außenansicht der Gondel 1 im zusammengesetzten und auf einem Turm 12 aufgesetzten Zustand. Zur Verdeutlichung ist an einem Rotorblattansatz 86 ein Rotorblatt 56 schematisch angesetzt dargestellt. Insbesondere sind in dieser Außenansicht Nähte im Bereich jeweils zweier zusammengesetzter Segmentflansche 508 zu erkennen. Im Bereich solcher Nähte sind zwei Hebeösen 732 zu erkennen, die zum Montieren der Gondel 1, nämlich dieses Nabenteils, vorgesehen sind. Es ist zu beachten, dass je nach Größe der Nabenabschnitt 80 auch einstückig geliefert werden kann. Damit können auch erst dann Hebeösen 732 im Bereich einer solchen Schweißnaht bei den Segmentflanschen 508 angebracht werden.

Die Außenrippen 706 können vorzugsweise so dünn und in so großen Zahlen vorgesehen sein, dass diese in der Größe und Auflösung der Darstellung der Fig. 8 nicht als Rippen erkennbar sind. Durch eine Öffnung eines Rotorblattansatzes 86 ist der vordere Konusabschnitt 52 von außen zu sehen.

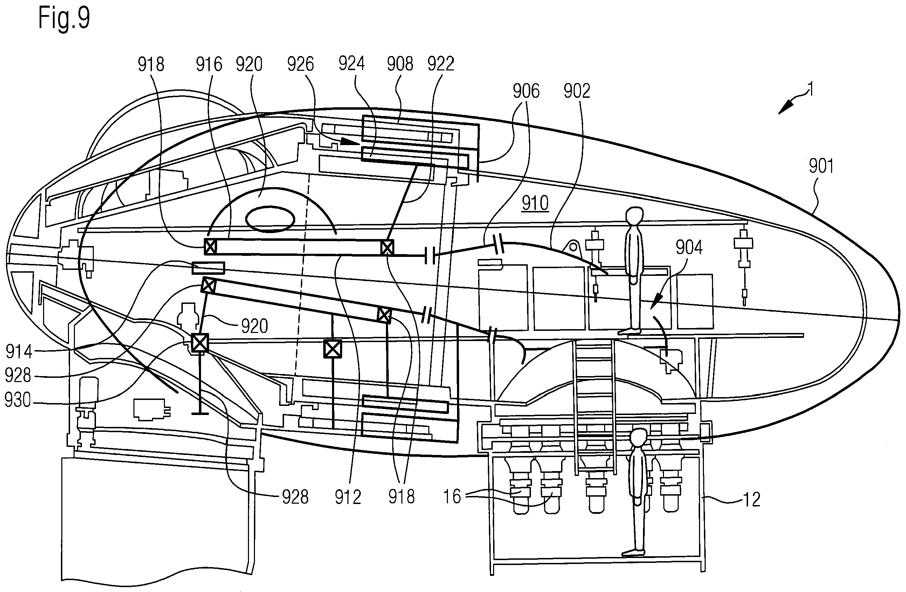

Fig. 9 entspricht im Wesentlichen der Darstellung der Fig. 2, wobei die Darstellung der Fig. 9 nicht perspektivisch ist bzw. sich in ihrer Perspektive von der der Fig. 2 leicht unterscheidet. Darüber hinaus ist in die Darstellung der Gondel 1 eine Gondel 901 einer bekannten Windenergieanlage geringerer Größe, insbesondere geringerer Leistungsklasse skizziert. Auch die bekannte Gondel 901 ist eine Gondel einer getriebelosen Windenergieanlage. Vom Turm 12 aus kommend weist eine solche Gondel des Standes der Technik zunächst einen gegossenen Maschinenträger 902 auf. Dieser erstreckt sich ähnlich einem gekrümmten Rohr vom Turm 12 aus kommend in einer etwa 90°-Biegung zum Generator. Um die Gondel 901 zu betreten, muss das Servicepersonal somit vom Turm 12 aus kommend von unten in den Maschinenträger 902 steigen und aus einer hinteren Maschinenträgeröffnung 904 den Maschinenträger 902 in einen freien Gondelinnenraum verlassen. An den Maschinenträger 902 schließt sich der Statorträger 906 an, der auch als Statorglocke bezeichnet werden kann, weil er die Gondel 901 im Grunde vollständig durchsetzt und etwa glockenförmig ausgestaltet ist. An seinem Umfang ist der Stator 908 befestigt, der hier nur sehr schematisch skizziert ist. Um in den vorderen Teil der Gondel 901 zu gelangen, ist in der Statorglocke 906 eine Statorglockenöffnung 910 vorgesehen. Von der Statorglocke 906 erstreckt sich ein Achszapfen 912. Der Achszapfen ist innen hohl und darin können Kabel zu einem Schleifringkörper 914 geführt werden. Durch den Achszapfen 912 kann eine Person jedoch nicht in den vorderen Bereich der Gondel 901 gelangen.

Auf diesem Achszapfen 912 wird der Rotor, nämlich sowohl der aerodynamische als auch der vom Generator, also der Läufer, getragen. Dazu ist eine Rotornabe 916 vorgesehen, die über zwei Achszapfenlager 918 auf dem Achszapfen drehbar gelagert ist. An der Nabe 916 befinden sich Rotorblattansätze 920 zum Befestigen von Rotorblättern. Außerdem ist an der Nabe ein Läuferträger 922 angeordnet, der sich von dort radial nach außen erstreckt und den Läufer 924 innerhalb des Stators 908 trägt. Zwischen dem Stator 908 und dem Läufer 924 ist der Luftspalt 926 ausgebildet.

In dem unten dargestellten Rotorblattansatz 920 ist ein Rotorblattadapter 928 gezeigt, der über Adapterlager 930 drehbar mit dem Rotorblattansatz 920 verbunden ist. Ein Rotorblatt ist hier nicht dargestellt.

Die Funktionsweise ist hier so, dass Windkräfte auf die Rotorblätter und von dort auf die Rotorblattadapter 928 übertragen werden, um dadurch eine Drehbewegung auszuüben.

Die Kräfte werden dann weiter über die Adapterlager 930 und die Rotorblattansätze 920 auf die Nabe 916 übertragen. Diese hat einen verhältnismäßig geringen Durchmesser und überträgt das wie beschrieben erzeugte Drehmoment weiter zu dem Läuferträger 922, von dem aus das Drehmoment nach außen zum Läufer 924 hin übertragen wird. Entsprechend ergibt sich ein verhältnismäßig ungünstiger Kraftfluss von den Rotorblättern zum Läufer hin. Zudem ist gerade der Achszapfen 912, der Gewichtskräfte des Rotors und darüber hinaus auch Kippmomente des Rotors aufnehmen muss, kleiner in seinem Durchmesser, als bei dem erfindungsgemäßen Konzept mit Verwendung eines Gondelträgers. Entsprechend werden solche Achszapfen in einer sehr massiven Bauweise, nämlich mit sehr dicken Wandstärken, gefertigt. Entsprechend ergibt sich ein höheres Gewicht, um eine ausreichende Stabilität zu gewährleisten.

Außerdem ist die Gondel 901, obwohl sie teilweise einen größeren Durchmesser aufweist als die erfindungsgemäße Gondel 1, schlechter begehbar, weil der Statorträger 902 inmitten der Gondel 901 angeordnet ist und somit im Grunde den besten Platz einnimmt. Sämtliche Gerätschaften müssen dort um diesen Maschinenträger 902 herum angeordnet werden.

Zudem ist eine Begehbarkeit der Gondel 901 nur in einem Teil gegeben, weil die Statorglocke 906 einen Großteil der Gondel 901 nicht zugänglich macht bzw. eine Zugänglichkeit nur bei festgesetztem Rotor und damit festgesetztem Läufer 924 möglich ist.

Dem entgegen wird eine Gondel 1 vorgeschlagen, die selbsttragend ist und dadurch zunächst einmal den Maschinenträger 902 vermeidet, nämlich ersetzt. Die Gondel 1 nimmt dabei die Tragkräfte in ihrer Außenhaut auf, die zu der bisherigen Konstruktion einen erheblichen größeren Durchmesser aufweist und somit eine hohe Stabilität bei deutlich geringerer Wandstärke erreichen kann. Trotz des großen Durchmessers sind somit sogar Gewichtseinsparungen - je nach konkreter Ausführung - gegenüber der bisherigen, in Fig. 9 beschriebenen Bauart möglich.

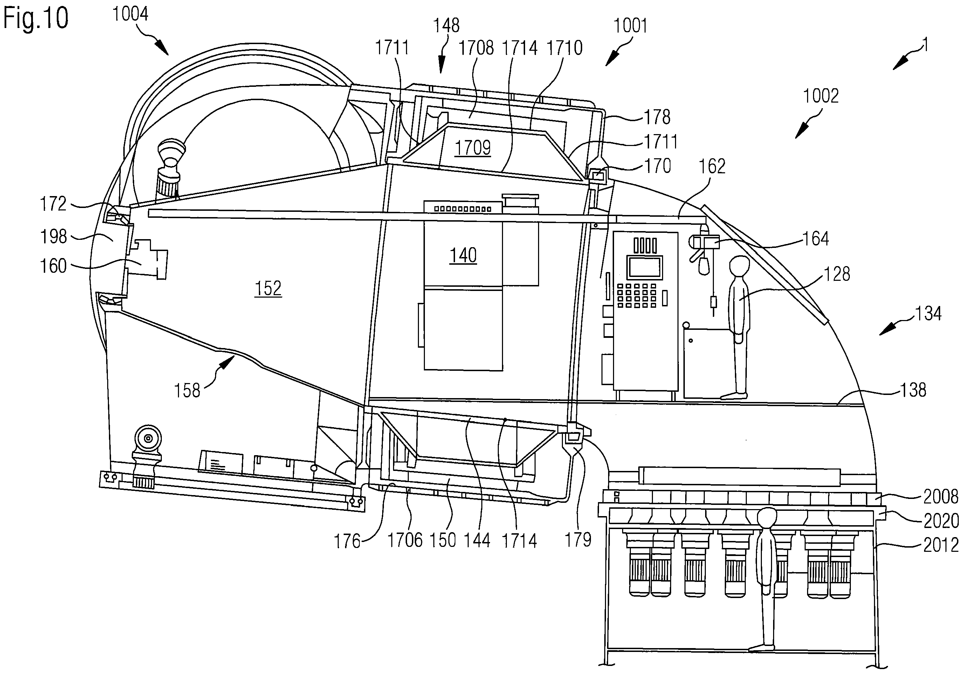

Die Gondelausgestaltung der Fig. 10 weist einen Gondelbogenbereich 134 auf, der funktional etwa dem Gürtelbereich 34 der Fig. 2 entspricht. Der Gondelbogenbereich 134 ist somit Teil des stehenden Teils 1002 der Gondel 1001. An dem Gondelbogenbereich 134 schließt sich ein Generatorabschnitt 144 und daran ein vorderer Konusabschnitt 152 an. Der Gondelbogenbereich 134 ist dabei über ein Azimutlager 1008 und einen Turmflansch 1010 mit dem Turm 1012 verbunden. Dadurch stellt der Gondelbogenbereich 134 eine stabile Verbindung vom Turm 1012 zum Generatorabschnitt 144 her. Hierzu ist der Gondelbogenbereich im Wesentlichen wie ein um etwa 90° gebogener Rohrabschnitt ausgebildet. Hierdurch kann eine sehr gute stabile und starre Verbindung zwischen dem Turm 1012 und dem Generatorabschnitt 144 erreicht werden. Es wurde festgestellt, dass ein hinterer Abschnitt 42, wie er beispielsweise in der Fig. 2 gezeigt ist, nicht notwendigerweise erforderlich ist. Durch die Ausgestaltung dieses rohrförmigen Elementes wird auf einfache und effiziente Weise letztlich auch ein Umlenken des Kraftflusses vom Läufer zum Turm gewährleistet. Durch den grundsätzlichen Aufbau, der eine tragende Außenhülle vorsieht und entsprechend viel Platz im Innenraum der Gondel 1001 schafft, kann auch auf den Platz verzichtet werden, der in der Ausführung gemäß Fig. 2 im hinteren Abschnitt 42 vorhanden ist.

Die Gondel 1001 der Fig. 10 kann in einer Variante so abgewandelt werden, dass insbesondere ein nichttragendes Verkleidungsteil hinten, an der dem Rotor abgewandten Seite, angesetzt wird. Hierin können bspw. Zusatzaggregate wie Kühlung oder Vorrichtungen für Servicearbeiten, wie z.B. Kranöffnungen, nach unten angeordnet sein.

Die im Gondelbogenbereich 134 dargestellte Person 128 steht auf einer Plattform 138 und verdeutlicht, dass auch bei dieser Ausführungsform gemäß der Fig. 10 viel Platz in der Gondel 1001 vorhanden ist.

Die Plattform 138 ist entsprechend gegenüber der Fig. 2 verkürzt. Ebenfalls ist die Kranschiene 162 verkürzt und trägt eine Winde 164, mit der Elemente aus dem Turm 1012 in die Gondel 1001 gehoben bzw. aus ihr abgesenkt werden können. Von dort, nämlich wo die Person 128 auf der Plattform 138 gezeigt ist, kann die Winde 164 mit oder ohne Last entlang der Kranschiene 162 bis ganz nach vorne in den vorderen Konusabschnitt 152 verschoben werden. Damit kann der gezeigte Schleifringkörper 160 als auch eine Wartungsöffnung 158 in dem vorderen Konusabschnitt 152 erreicht werden.

Der vordere Konusabschnitt 152 ist über den Generatorabschnitt 144 mit dem Gondelbogenbereich 134 fest verbunden und darüber schließlich mit dem Turm 1012. Der Generatorabschnitt 144 weist einen Zylindermantelabschnitt 1714 auf, der im Wesentlichen eine direkte Verbindung vom Gondelbogenbereich 134 zum vorderen Konusabschnitt 152 bildet und durch die Art seiner Gestaltung, insbesondere der Zylinderform, eine gute Kraftübertragung auch vom vorderen Konusabschnitt 152 zum Gondelbogenbereich 134 ermöglicht. Hierüber werden insbesondere Kräfte übertragen, die vom aerodynamischen Rotor auf die Nabenkappe 198 weiter auf das vordere Lager 172 und dadurch auf den vorderen Konusabschnitt 152 übertragen werden.

Um den zylindrischen Abschnitt 1714 herum ist ein Statortragabschnitt 1710 angeordnet und bildet mit Tragseiten 1711 und dem zylindrischen Abschnitt 1714 zusammen eine im Schnitt etwa trapezförmige Konstruktion. Hierdurch wird der Stator 148, insbesondere das Statorblechpaket 1708, getragen. Innerhalb der trapezförmigen Konstruktion 1709 können Kühlströme zum Kühlen des Stators 148, insbesondere der Blechpakete 1708, geführt werden.

Da auch innerhalb des Generatorabschnitts 144 ausreichend Platz vorhanden ist und dieser Generatorabschnitt 144 auch im Betrieb der Windenergieanlage begehbar ist, sind auch dort Geräte wie Steuerschränke 140 o.dgl. untergebracht.

Die Ausführung der Fig. 10 weist an dem drehenden Teil 1004 einen Läufermantelabschnitt 176 auf, der den Läufer 150 trägt und mit Außenrippen 1706 versehen ist. Die Außenrippen 1706 sind etwa schraubenförmig um die Gondel 1001, insbesondere nämlich den Läufermantelabschnitt 176, angeordnet. Vom aerodynamischen Rotor im Betrieb abgelenkter Wind kann somit diese Außenrippen 1706 in vorteilhafter Weise anströmen, nämlich mit einem etwa parallel zu den Außenrippen 1706 strömenden Luftstrom. Diese Art der Ausgestaltung der Außenrippen 1706 ist nicht auf die gezeigte Ausführungsform der Fig. 10 beschränkt. Vielmehr sind solche Außenrippen generell eine bevorzugte Ausgestaltung.

Der Läufermantelabschnitt 176 ist über eine ringförmige Tragstruktur 178, die gleichzeitig als Abdeckschürze fungiert, auf dem hinteren Lager 170 gelagert. Ein Verbindungstragabschnitt 179 spannt sich etwa über einen Außenumfang des hinteren Lagers 170. Somit werden die auf den drehenden Teil 1004 wirkenden Kräfte über die ringförmige Tragstruktur 178 und den Verbindungsabschnitt 179 auf das hintere Lager 170 übertragen. Außerdem schließt diese ringförmige Tragstruktur 178 jedenfalls von der einen Seite den Generator 146 ein.

Die gezeigte Ausführung der Fig. 10 kann sich in weiteren Details von der Ausführungsform, wie sie beispielsweise in Fig. 2 gezeigt ist, unterscheiden. Soweit nicht anders beschrieben, entsprechen weitere Elemente dieser Ausführungsform der Fig. 10 zumindest dem Grunde nach der Ausführung gemäß der Fig. 2. Weiterhin begünstigt die neuartige Bauart, wie sie z.B. in Figur 2 oder den anderen Figuren gezeigt ist, einen wesentlich günstigeren Kraftfluss von den Rotorblättern zum Läufer, weil der Kraftfluss im Wesentlichen bereits im Bereich der Außenhaut bzw. äußeren Wandungen des Nabenabschnitts 80 aufgenommen und zum außen liegenden Läufer 50 weitergeleitet wird. Jedenfalls bietet die neu vorgeschlagene Gondel 1 trotz teilweise reduziertem Gesamtdurchmesser wesentlich mehr Platzangebot im Inneren, weil im Grunde der gesamte Innenraum zur Verfügung steht für das Vorsehen von diversen Gerätschaften und auch für das Vorsehen einer Arbeitsplattform bzw. einer Trittfläche zum Begehen der Gondel.

Weiterhin begünstigt die neu vorgeschlagene Gondelkonstruktion das Vorsehen eines Generators als Außenläufer, was wiederum zu einem größeren Luftspaltdurchmesser bei unverändertem Gesamtaußendurchmesser führen kann, weil die radiale Ausdehnung des Läufers geringer ist als die des Stators.

Das Vorsehen des Rotors mit Kühlrippen, einer sogenannten Außenverrippung kann beispielsweise eine Kühlfläche im, Bereich von ca. 20 - 150 qm für einen Außendurchmesser von 5 m schaffen. Das hintere Lager 70 kann als Rollenlager ausgestaltet und dabei tauschbar sein.

Der Gürtelbereich 34 des stehenden Teils 2, der auch als Gondelträger 34 bezeichnet werden kann, wird vorzugsweise als Gussteil vorgesehen. Der hintere Abschnitt 42 kann auch als Heckverkleidung 42 bezeichnet werden und wird vorzugsweise aus Aluminium gefertigt. Für die Azimutverstellung kann ein sogenanntes Azimutmodul im Turmkopf 26 angeordnet sein, für das gleichmäßig angeordnete Antriebe, insbesondere gleichmäßig über den Umfang verteilt vorgeschlagen werden. Das Azimutlager 8 kann, insbesondere an seinem inneren Lagerring 22 innenverzahnt ausgebildet sein. Ein geringerer Verzahnungsdurchmesser, im Vergleich zu außen verzahnten Lösungen kann durch eine größere Anzahl Antriebe ausgeglichen werden. Gemäß einer Ausführungsform werden hier 14 Azimutantriebe 16 vorgesehen.

Für die drehbare Verbindung zwischen vorderem Konusabschnitt 52 und dem Lagerstutzen 96 kann ein zweireihiges Kegelrollenlager als vorderes Lager 72 vorgesehen sein, das von innen tauschbar ist.

In dem vorderen Konusabschnitt 52 bzw. an dem Lagerstutzen 96 kann der Schleifringkörper aufgenommen werden. Der Lagerstutzen 96 ist Teil der Nabenkappe 98, die auch zum Integrieren der drei Nabensegmente 502 bevorzugt vorgesehen ist.

Durch die vorgeschlagene selbsttragende Gondel können Nachteile wie hohes Gewicht und hoher Montageaufwand adressiert werden. Entsprechend kann eine Gewichtsreduzierung und Verringerung des Montageaufwands erreicht werden. Weitere Vorteile bzw. vorgeschlagene Aspekte sind die Folgenden.

Der Luftspalt liegt im natürlichen Kraftfluss. Durch die außen liegende Tragstruktur wird ein niedriges Spannungsniveau erreicht. Hierbei ist insbesondere zu beachten, dass das Spannungsniveau proportional ist zum Kehrwert des Quadrates des Radius der Tragstruktur bezogen auf eine Gondelmittelachse. Dabei nimmt die Stabilität einer solchen Tragstruktur grundsätzlich nur proportional mit der jeweiligen Wandstärke der Tragstruktur zu.

Durch die Verwendung des hinteren Lagers 70 in der Nähe des Luftspaltes, kann eine hohe Luftspaltsteifigkeit erreicht werden. Zudem liegt der Luftspalt in axialer Richtung gesehen zwischen dem hinteren Lager 70 und dem vorderen Lager 72. Dadurch ist auch eine hohe Kippstabilität und entsprechend geringe Luftspaltdicke möglich. Ebenso kann eine Luftspaltverlängerung begünstigt werden. All dies führt schließlich zu geringen Luftspaltverlusten.

Durch den vorgeschlagenen Außenläufergenerator kann der Läufer von außen gekühlt werden, was zunächst rein passiv möglich sein kann.

Der Stator kann durch die frei zugängliche Paketmitte besser gekühlt werden. Der Stator ist bei der vorgeschlagenen Lösung von innen erreichbar. Im Wesentlichen gibt es keine Höhen- bzw. Dickenbegrenzung im Blechpaket des Stators. Hierdurch gibt es viel Platz für Kühlung und es kann auch die Paketsteifigkeit der Blechpakete erhöht werden.

Die Gondel kann bei kleinen Außenabmessungen innen geräumig gebildet werden.

Außerdem weist eine selbsttragende Gondel eine robuste Außenstruktur auf, die insbesondere Transport und Aufbau begünstigt.

Durch die robuste Außenstruktur und zudem angegossene Hebeaugen, wie die Hebeösen 732, kann der Aufbau einer Windenergieanlage vor Ort vereinfacht werden. Kleinteilmontagen auf der Baustelle werden hierbei entbehrlich. Es ist grundsätzlich ein einfacher Komponententausch möglich, insbesondere hinsichtlich des hinteren Lagers 70 und des vorderen Lagers 72. Ebenfalls wird eine etwaige Personenrettung aus der Gondel 1 problemarmer gestaltbar sein.

Die vorgeschlagene Gondel bietet zudem eine hohe Dichtigkeit. Dies wird beispielsweise durch den Anschluss des Rotorblattes außen an dem Rotorblattansatz 86 des Nabenabschnitts 80 erreicht, weil keine zusätzliche Verkleidung vorgesehen ist, die an Ansatzkanten feuchtigkeitsdurchlässig sein könnte. Auch im Bereich der Azimutlagerung, also der Verbindung zum Turmkopf, kann eine Dichtigkeit verbessert werden.

Für das Zuführen von Zuluft wird vorgeschlagen, Wasserabscheider und/oder Sandabscheider zu verwenden.

Die vorgeschlagene Gondel ist zudem vorteilhaft für größere Anlagen, nämlich insbesondere für zukünftige Anlagen mit einer Baugröße und Leistungsgröße, die die derzeitige Baugröße bzw. Leistungsgröße überschreitet. Eine Begrenzung ergibt sich insbesondere durch Begrenzungen im Straßentransport der Komponenten. Ggf. sind der Gondelträger und/oder der Nabenabschnitt für den Transport entsprechend zu teilen. Dadurch, dass die Gondel selbsttragend ist und damit die Gondelverkleidung die tragende Struktur bildet, kann die Gondel für größer werdende Anlagen entsprechend mitwachsen, also bei größeren Anlagen entsprechend größer ausgefertigt werden, wodurch sich unmittelbar eine Stabilitätserhöhung ergibt.

Der Kraftfluss der vorgeschlagenen Gondel gestaltet sich auch derart günstig, dass er von den Rotorblättern von außen kommend durch den Nabenabschnitt 80 direkt zum Läufer 50 geleitet wird und dann weiter zum Stator und von dort zur Außenhülle des stehenden Teils 2 in im Grunde gerader, einfacher Richtung geleitet wird.

Für das hintere Lager 70 ist ein Rollenlager mit Laufbahndurchmesser von etwa 3m möglich, was eine hohe Stabilität, insbesondere Kippsteifigkeit ermöglicht.

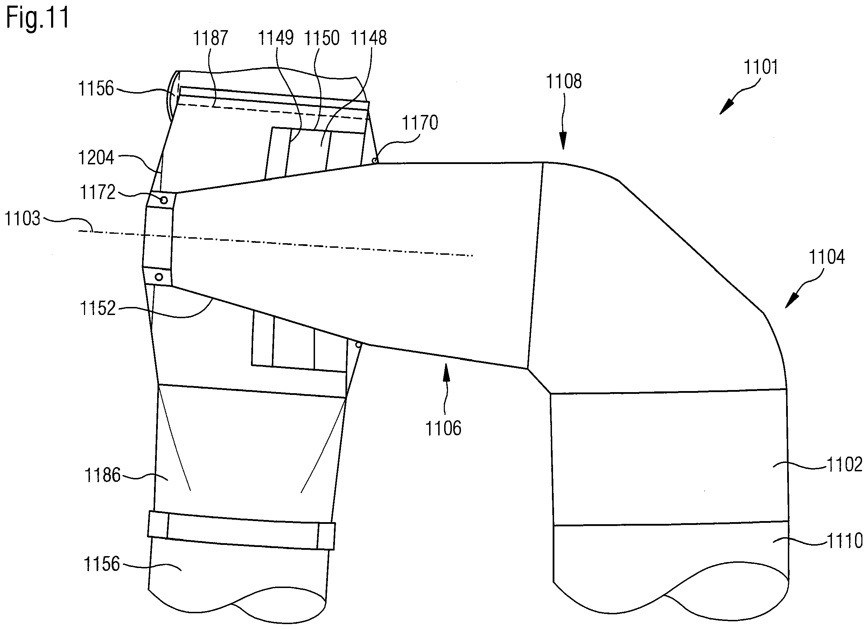

Die Gondel 1101 der Fig. 11 weist im Wesentlichen einen rohrförmigen, um etwa 90° gewinkelten bzw. gebogenen Körper auf. Dabei sind ein Turmanschlussbereich 1102, ein Verbindungsabschnitt 1104 und ein Achszapfenabschnitt 1106 vorhanden. Der Verbindungsabschnitt 1104 ist über einen etwa ringförmigen Achszapfenanschlussbereich 1108 mit dem Achszapfenabschnitt 1106 verbunden bzw. dort an diesem angeschlossen. Über den Turmanschlussbereich 1102 ist der Verbindungsabschnitt 1104 mit dem Turmkopf 1110 und damit einem entsprechenden Turm verbunden.

Der Achszapfenabschnitt 1106 weist einen vorderen Konusabschnitt 1152 auf, der einen Stator 1148 aufweist. Von dem Stator 1148 ist eine Statorkonstruktion 1149 gezeigt, die im Wesentlichen einen in der Fig. 11 nicht dargestellten, elektromagnetisch wirksamen Teil des Stators 1148 trägt, nämlich insbesondere Statorblechpakete und Statorwicklungen. Jedenfalls kann die Statorkonstruktion 1149 zusammen mit dem Achszapfenabschnitt 1106, insbesondere dem vorderen Konusabschnitt 1152, in einem Stück ausgebildet sein und somit in diesen Achszapfenabschnitt integriert sein. Aufgrund seiner Funktion kann der vordere Konusabschnitt 1152 auch als Achszapfen bezeichnet werden und insoweit wäre dann der Stator 1148, zumindest dessen Statorkonstruktion 1149, in den Achszapfen integriert.

Der drehende Teil 1204 der Gondel 1101 ist mittels zweier Lager, nämlich einem hinteren Lager 1170 und einem vorderen Lager 1172 drehbar an dem vorderen Konusabschnitt 1152 und damit drehbar an dem Achszapfenabschnitt 1106 gelagert. Rotorblätter 1156 sind somit drehbar um eine Drehachse 1103 gelagert. Dabei ist jedes Rotorblatt 1156 über einen Rotorblattansatz 1186 bzw. Rotorblattadapter 1186 jeweils an einem Blattanschluss 1187 an dem drehenden Teil 1204 angeschlossen, also damit fest verbunden. Im Bereich dieses Blattanschlusses 1187 ist auch der Läufer 1150 des Generators, der sich hier aus dem Stator 1148 und dem Läufer 1150 zusammensetzt, angeordnet.

Bezogen auf die Drehachse 1103 ist somit der Generator aus Stator 1148 und Läufer 1150 in axialer Richtung in demselben Bereich, wie die Blattanschlüsse 1187 angeordnet. Die drei Blattanschlüsse 1187 definieren einen Blattanschlussbereich. Außerdem liegt hier der Generator aus Stator 1148 und Läufer 1150 in radialer Richtung, bezogen auf die Drehachse 1103, innerhalb der Blattanschlüsse 1187. Die Blattanschlüsse 1187 drehen sich also im Betrieb der Windenergieanlage außen um den Generator aus Stator 1148 und Läufer 1150. Dabei dreht sich der Läufer 1150 mit den Blattanschlüssen 1187 mit. In der gezeigten Ausführungsform ist somit der Generator sowohl in axialer als auch in radialer Richtung innerhalb des Blattanschlussbereichs, der durch die Blattanschlüsse 1187 definiert wird.

Außerdem ist der Generator innerhalb des drehenden Teils 1204, das somit auch eine Blattanschlusshaube bildet und den Generator darin einschließt und nach außen gegen Witterungseinflüsse schützt.

Insbesondere dann, wenn der Generator eine sehr lange Bauform aufweist und eine größere axiale Länge aufweist als der Blattanschlussbereich, kann sich der Generator in axialer Richtung auch zu wenigstens einer Seite über den Blattanschlussbereich hinaus erstrecken.

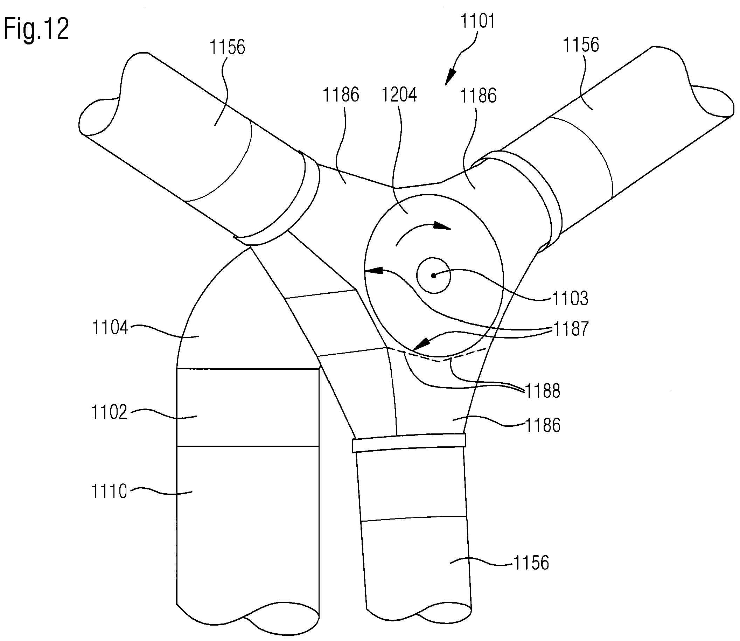

Fig. 12 zeigt die Gondel 1101 der Fig. 11 in einer perspektivischen Ansicht schräg von vorne. Dort sind insbesondere die Rotorblätter 1156 zum Teil dargestellt. Die Rotorblätter 1156 sind über den Rotorblattansatz bzw. Rotorblattadapter 1186 jeweils an dem drehenden Teil 1204 der Gondel 1101 angeschlossen. Es ist zu erkennen, dass das Blattanschlussteil 1204 den Generator vollständig einschließt.

Der Blattanschluss 1187 ist in Figur 12 als etwa V-förmiger Bereich zu erkennen, an dem der Rotorblattansatz bzw. Rotorblattadapter 1186 an dem drehenden Teil befestigt ist. Zur Verdeutlichung der V-förmigen Gestalt sind exemplarisch für einen der drei Blattanschlüsse 1187 zwei gestrichelte Hilfslinien 1188 eingezeichnet. Durch diese Art der Anbindung kein ein Kraftfluss von dem jeweiligen Rotorblatt 1156 zum drehenden Teil 1204 verbessert werden, jedenfalls im Vergleich zu einer geraden statt V-förmigen Anbindung. Außerdem können die Außenabmessungen des drehenden Teils 1204 wenigstens etwas reduziert werden, was insbesondere bei einem separaten Transport des drehenden Teils 1204 zum Aufstellungsort der Windenergieanlage von Bedeutung ist.

Insbesondere die beschriebene V-förmige Form des Blattanschlusses, also die Anbindung des Rotorblattansatzes bzw. Rotorblattadapters 1186 an dem drehenden Teils 1204 in einem V-förmigen Bereich ist eine bevorzugte Ausführungsform, die nicht auf das konkrete Beispiel er Figuren 11 und 12 beschränkt ist, sondern allgemein gilt.

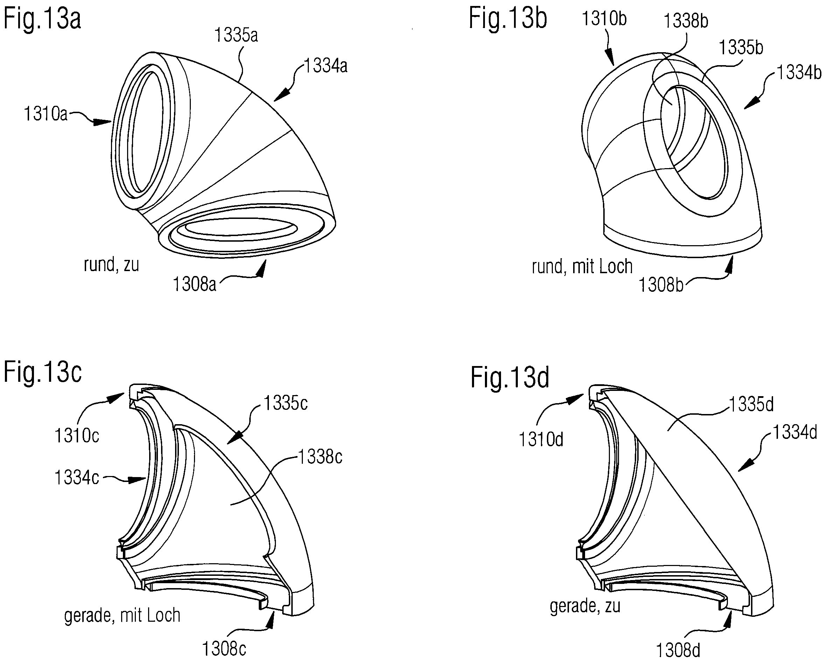

Fig. 13a bis 13d zeigen vier unterschiedliche Ausführungsformen eines Gondelbogenbereichs 1334a bis 1334d. Diese Gondelbogenbereiche entsprechen im Wesentlichen dem Gondelbogenbereich 134, der in Fig. 10 gezeigt ist. Der Gondelbogenbereich 1334a der Fig. 13a weist einen Außenbogenbereich 1335a auf, der von einem Turmanschlussbereich 1308a zu einem Generatoranschlussbereich 1310a etwa gleichmäßig bogenförmig verläuft. Der Außenbogenbereich 1335a ist hierbei geschlossen ausgestaltet und der Gondelbogenbereich 1334a hat im Grunde die Form eines gleichmäßig um etwa 90° gebogenen Rohrabschnitts.

Der Gondelbogenbereich 1334b der Fig. 13b weist im Grund die gleiche Form auf, wie der Gondelbogenbereich 1334a. Dabei weist der Gondelbogenbereich 1334b der Fig. 13b einen Außenbogenbereich 1335b mit einer Ausstiegsöffnung 1338b auf. Diese Ausstiegsöffnung 1338b ermöglicht es Servicepersonal, aus der Gondel, nämlich dem Gondelbogenbereich 1334b herauszusteigen. Die Fig. 13b, und im Übrigen auch die Fig. 13a, 13c und 13d zeigen jeweils einen noch unbestückten Gondelbogenbereich und somit ist auch in der Fig. 13b keine Tür o.ä. in der Ausstiegsöffnung 1338b gezeigt. Die in den Fig. 13a bis 13d gezeigten Gondelbogenbereiche können beispielsweise als Gussteil hergestellt sein.

Die Fig. 13a bis 13d zeigen unterschiedliche Ausführungsformen für den Gondelbogenbereich 1334a bis 1334d. Die Bezugszeichen dieser vier Ausführungsformen sind hinsichtlich der Nummern identisch, unterscheiden sich aber in ihrem angehängten Buchstaben a bis d entsprechend der Zeichnung der Fig. 13a bis 13d.

Die Ausführungsform der Fig. 13c zeigt einen Gondelbogenbereich 1334c mit einem im Wesentlichen geraden Außenbogenbereich 1335c, der insoweit auch als Rückenbereich 1335c bezeichnet werden kann. In diesem Außenbogenbereich bzw. Rückenbereich 1335c ist zudem eine Ausstiegsöffnung 1338c vorhanden.

Die Ausführungsform der Fig. 13d zeigt den Gondelbogenbereich 1334d mit einem im Wesentlichen geraden Außenbogenbereich bzw. Rückenbereich 1335d, jedoch ohne Ausstiegsöffnung.

Durch die Ausstiegsöffnungen 1338b bzw. 1338c kann auf einfache Art und Weise ein Ausstieg aus der Gondel realisiert werden. Andererseits können die Ausführungsformen der Fig. 13a und 13d ohne Ausstiegsöffnung eine höhere Stabilität bzw. dieselbe Stabilität auf einfachere Art und Weise erreichen. Ein etwaiger benötigter Ausstieg wäre dann an anderer Stelle vorzusehen.

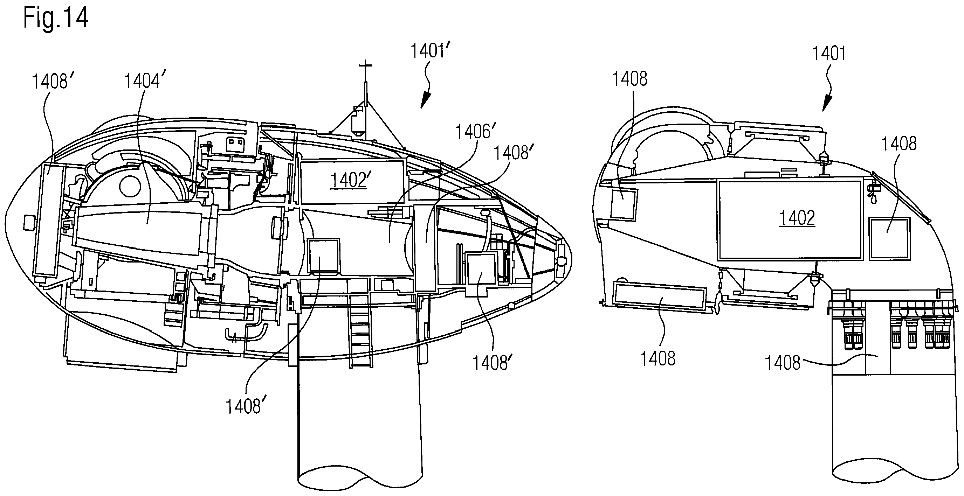

Fig. 14 zeigt in einer schematischen seitlichen Schnittansicht eine Gondel 1401 gemäß einer Ausführungsform der Erfindung und eine Gondel 1401' gemäß dem Stande der Technik, wobei beide Gondeln 1401 und 1401' Teil einer Windenergieanlage gleicher Leistungsklasse sind. In der Fig. 14 sollen die vorhandenen Platzangebote veranschaulicht werden. Insbesondere weist die erfindungsgemäße Gondel 1401 einen sehr großen zusammenhängenden Arbeitsplatzbereich 1402 auf. Hierfür ist ein entsprechendes Rechteck in der Gondel 1401 eingezeichnet, das diesen Arbeitsbereich 1402 zeigt. Der größte zusammenhängende im Querschnitt rechteckförmige Arbeitsbereich 1402' ist in der Gondel 1401' eingezeichnet. Obwohl die Gondel 1401' gemäß dem Stand er Technik deutlich größer ist als die Gondel 1401 gemäß einer Ausführungsform der Erfindung, weist sie dennoch weniger kompakten, zusammenhängenden Freiraum auf, was dieser Arbeitsbereich 1402' verdeutlichen soll. Das liegt daran, dass beim Stand der Technik eine Tragkonstruktion, insbesondere ein Achszapfen 1404' und ein Maschinenträger 1406' zentral innerhalb der Gondel 1401' angeordnet sind und etwaige Freiräume nur um diesen Maschinenträger 1406' bzw. Achszapfen 1404' herum verteilt angeordnet werden können.

Bei der Gondel 1401 gemäß einer Ausführungsform des Standes der Technik ist diese selbsttragend und ihre eigene Hülle bildet damit die Tragkonstruktion und somit ist keine weitere Tragkonstruktion vorgesehen. Der gesamte innere Bereich der Gondel 1401 steht somit im Wesentlichen zur Verwendung für Geräte und zum Aufenthalt von Personen, insbesondere Servicepersonal, zur Verfügung.

Zur Veranschaulichung des vorhandenen Platzbedarfs sind zudem weitere Freiräume 1408 in der Gondel 1401 eingezeichnet bzw. weitere Freiräume 1408' in der Gondel 1401' eingezeichnet.

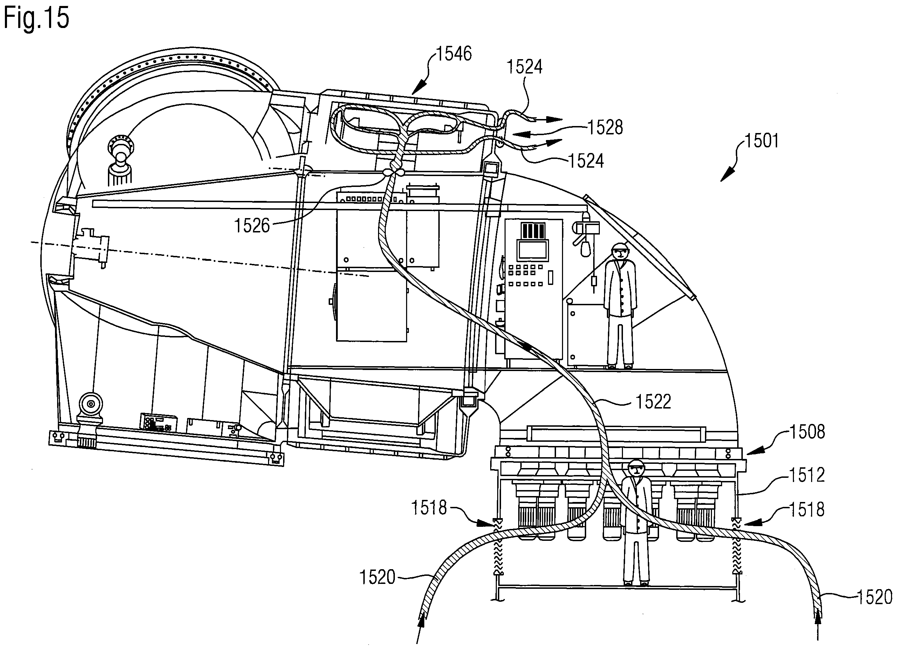

Eine Möglichkeit der Kühlung zeigt die Ausführungsform der Fig. 15. Die Gondel 1501 ist über ein Azimutlager 1508 mit dem Turm 1512 verbunden, von dem hier nur ein oberer Teil gezeigt ist. In dem Turm 1512 sind Einströmöffnungen 1518 vorgesehen. Durch diese Einströmöffnungen 1518 strömt Umgebungsluft 1520 ein, die im Bereich des Azimutlagers 1508 in die Gondel 1501 als Kühlstrom 1522 einströmt. Der Kühlstrom 1522 gelangt dann zum Generator 1546, durchströmt diesen und verlässt die Windenergieanlage als erwärmte Abluft 1524.

Die Fig. 15 ist dabei sehr schematisch dargestellt und zeigt das Kühlen des Generators 1546 nur im oberen Bereich. Tatsächlich läuft der Generator 1546 im Wesentlichen vollständig um die Gondel 1501 herum und eine Kühlung findet auch auf dem ganzen Umfang des Generators 1546 statt. Auch das beispielhaft eingezeichnete Gebläse 1526 ist bestimmungsgemäß nicht nur an der einen gezeigten Position, sondern es können davon mehrere in Umfangsrichtung um den Generator 1546 verteilt sein. Die Gondel 1501 kann im Bereich des Generators 1546 Ausströmöffnungen 1528 aufweisen, die vorzugsweise an der dem Wind abgewandten Seite der Gondel 1501 angeordnet sind.

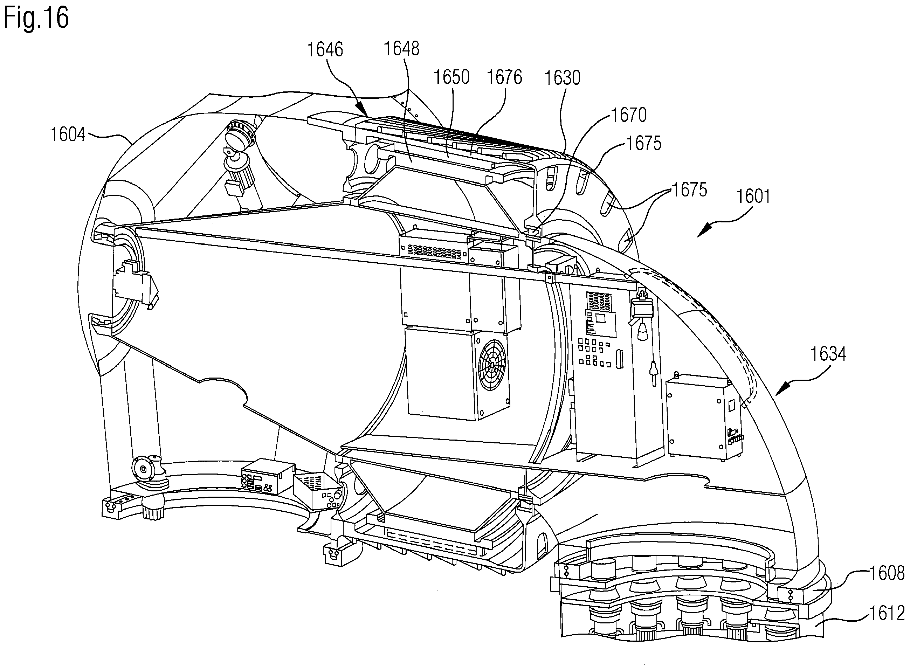

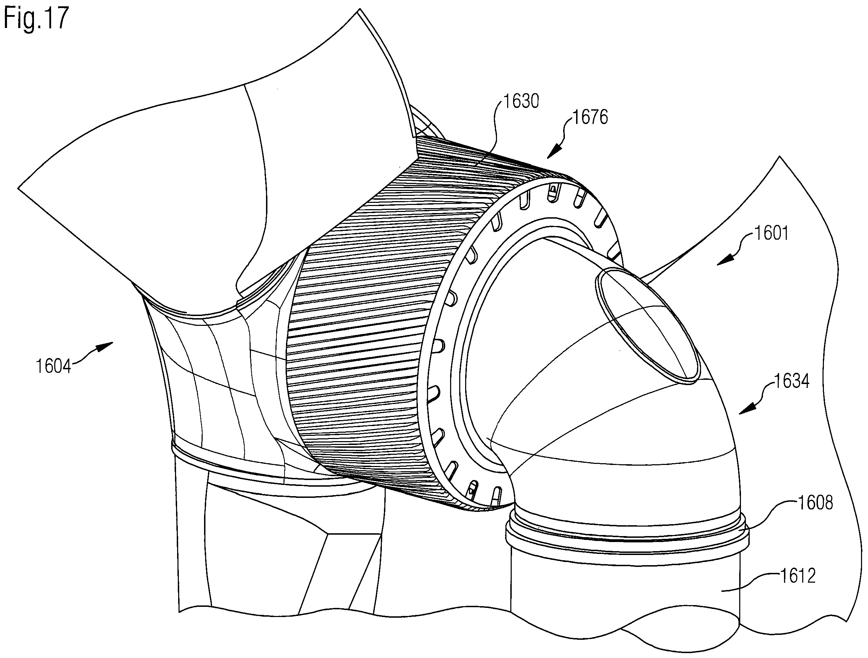

Die Fig. 16 und 17 veranschaulichen nochmals den Aufbau der Gondel 1601 gemäß einer Ausführungsform. Die Gondel 1601 ist mit ihrem Gondelbogenbereich 1634 über ein Azimutlager 1608 an dem Turm 1612 drehbar befestigt. Der Läufer 1650 ist an einem Läufermantelabschnitt 1676 unter anderem über ein hinteres Lager 1670 an dem Gondelbogenbereich 1634 drehbar gelagert.

Der Läufer 1650 dreht somit relativ zu dem Stator 1648, der innerhalb des Läufers 1650 angeordnet ist. Der Stator 1648 und der Läufer 1650 bilden im Grunde den Generator 1646, der u.a. über schräg angeordnete Kühlrippen 1630 gekühlt werden kann. Die schräg liegenden Kühlrippen 1630 sind dabei im Wesentlichen so schräg gestellt, dass sie bei einer Anströmung durch den Wind, der gemäß der Fig. 16 und 17 etwa von der linken Seite der Zeichenebene kommt, eine bestimmungsgemäße Drehung des aerodynamischen Rotors bzw. drehenden Teils 1604 berücksichtigen. Bezogen auf die Gondel 1601 strömt der Wind hierbei nämlich etwa schraubenförmig und darauf sind diese Kühlrippen 1630 ausgerichtet.

Zwischen dem Bereich der Kühlrippen 1630 und dem hinteren Lager 1670 ist ein Schürzenabschnitt 1674 bzw. eine Abdeckschürze 1674 angeordnet, die zudem Schürzenöffnungen 1675 aufweist, durch die kühlende Luft, insbesondere durch Kühlung bereits aufgewärmte Abluft ausströmen kann. Insbesondere die in Fig. 15 veranschaulichte Kühlung kann als Kühlstrom durch solche Schürzenöffnungen 1675 ausströmen.

## Patentansprüche

1. Gondel (1) einer Windenergieanlage (100), wobei die Windenergieanlage (100) einen Turm (102) oder Mast, einen aerodynamischen Rotor (106) und einen Generator (46) mit einem Läufer (50) und einem Stator aufweist und die Gondel (1) mit einer Gondelverkleidung (2, 4) versehen ist, wobei die Gondel (1), insbesondere die Gondelverkleidung (2, 4), selbsttragend ist, und wobei die Gondelverkleidung (2, 4) einen drehenden Teil (4) aufweist, der wenigstens ein Rotorblatt (56) des aerodynamischen Rotors (106) und/oder den Läufer (50) des Generators (46) trägt und einen stehenden Teil (2) aufweist, der den Stator (48) des Generators (46) trägt, wobei der drehende Teil (4) der Gondel (1) mittels eines hinteren Lagers (70) und eines vorderen Lagers (72) drehbar um eine im Wesentlichen horizontale Achse auf dem stehenden Teil (2) gelagert ist, **dadurch gekennzeichnet, dass**
- der stehende Teil (2) einen vorderen, insbesondere begehbaren, Konusabschnitt (52) aufweist, und
- ein Nabenabschnitt (80) zum Aufnehmen des wenigstens einen Rotorblatts (56) vorgesehen ist, wobei der Nabenabschnitt (80) drehbar um den Konusabschnit (52) gelagert ist.

2. Gondel (1) nach Anspruch 1,
**dadurch gekennzeichnet, dass** die Gondelverkleidung (2, 4) den Generator (46) trägt.

3. Gondel (1) nach Anspruch 1 oder 2,
**dadurch gekennzeichnet, dass** die Gondelverkleidung (2, 4) im Wesentlichen die Funktion eines Maschinenträgers (902) übernimmt.

4. Gondel (1) nach einem der vorstehenden Ansprüche,
**dadurch gekennzeichnet, dass** die Windenergieanlage (100) derart getriebelos ist, dass der Läufer (50) ohne mechanische Übersetzung von dem aerodynamischen Rotor (106) gedreht wird.

5. Gondel (1) nach einem der vorstehenden Ansprüche,
**dadurch gekennzeichnet, dass** die Gondelverkleidung (2, 4), der drehende Teil (4) und/oder der stehende Teil (2) ganz oder teilweise aus Stahl, insbesondere Sphäroguss oder Aluminium gefertigt ist.

6. Gondel (1) nach einem der vorstehenden Ansprüche,
**dadurch gekennzeichnet, dass** der Generator (46) als Außenläufer ausgebildet ist.

7. Gondel (1) nach einem der vorstehenden Ansprüche,
**gekennzeichnet durch** einen fest mit der Gondel (1) verbundenen Zahnkranz (20) mit Innenverzahnung zur Azimutverstellung der Gondel (1), dazu vorbereitet, dass wenigstens ein Azimutantrieb (16), insbesondere mehrere Azimutantriebe (16), die fest im Turm (12) angeordnet sind, mit jeweils einem Ritzel an dem Zahnkranz mit Innenverzahnung angreifen.

8. Gondel (1) nach einem der vorstehenden Ansprüche,
**gekennzeichnet durch** eine durch den Generator (46) hindurch verlaufende Arbeitsplattform (38).

9. Gondel (1) nach einem der vorstehenden Ansprüche,
**dadurch gekennzeichnet, dass** der Generator (46) eine Nennleistung von über 1 MW hat.

10. Gondel (1) nach einem der vorstehenden Ansprüche,
**dadurch gekennzeichnet, dass** die Gondel (1) begehbar ist.

11. Gondel (1) nach einem der vorstehenden Ansprüche,
**dadurch gekennzeichnet, dass** der Generator (46) als langsam laufender Generator und/oder als vielpoliger Generator mit wenigstens 48, wenigstens 72, wenigstens 96, insbesondere wenigstens 192 Statorpolen ausgebildet ist.

12. Gondel (1) nach einem der vorstehenden Ansprüche,
**dadurch gekennzeichnet, dass** die Gondelverkleidung (2, 4)
- einen im Bereich des Generators und aerodynamischen Rotors angeordneten Achszapfenabschnitt (1106) aufweist, zum Tragen des Generators und des aerodynamischen Rotors, und
- einen den Achszapfenabschnitt (1106) mit dem Turm verbindenden Verbindungsabschnitt aufweist und der Verbindungsabschnitt eine vom Turm zum Achszapfenabschnitt (1106) gebogene oder abgewinkelte Außenform aufweist, insbesondere eine etwa um 90° gebogene oder abgewinkelte, rohrförmige Form aufweist.

13. Gondel (1) nach einem der vorstehenden Ansprüche,'
**dadurch gekennzeichnet, dass** der drehende Teil (4) Blattanschlüsse (1187) aufweist zum Befestigen jeweils eines Rotorblattes an dem drehenden Teil (4), und die Blattanschlüsse (1187) sich in axialer Richtung über einen Blattanschlussbereich erstrecken und der Generator, insbesondere sein Läufer (1150), in Bezug auf die axiale Richtung in diesem Blattanschlussbereich angeordnet ist und/oder dass der Generator in Bezug auf die Drehachse in radialer Richtung innerhalb der Blattanschlüsse angeordnet ist.

14. Windenergieanlage (100) mit einem Turm (102) oder Mast und einer Gondel (1) nach einem der vorstehenden Ansprüche.

15. Windenergieanlage (100) nach Anspruch 14,
**dadurch gekennzeichnet, dass** wenigstens ein Azimutantrieb (16), insbesondere mehrere Azimutantriebe (16), fest im Turm (12) bzw. Mast angeordnet sind und mit jeweils einem Ritzel (18) an einem bzw. dem fest mit der Gondel (1) verbundenen, eine Innenverzahnung aufweisenden Zahnkranz (20) angreifen.

16. Verfahren zum Aufbauen einer Windenergieanlage (100) nach Anspruch 14 oder 15, wobei Läufer (50) und Stator (48) des Generators (46) bereits vorm Anheben zur Installation auf einem Turm (12) mittels eines Lagers miteinander verbunden sind.

17. Verfahren nach Anspruch 16, wobei Stator (48), Läufer (50) und wenigstens ein den Stator (48) und den Läufer (50) verbindendes Lager werksseitig und/oder auf der Baustelle am Boden vorgefertigt sind.

18. Verfahren nach Anspruch 16 oder 17, wobei eine Windenergieanlage (100) nach Anspruch 12 oder 13 aufgebaut wird und/oder elektrische Einrichtungen in der Gondel (1) vorinstalliert sind.

## Claims

1. A pod (1) of a wind power installation (100), wherein the wind power installation (100) has a pylon (102) or mast, an aerodynamic rotor (106) and a generator (46) with a generator rotor member (50) and a stator and the pod (1) is provided with a pod casing (2, 4), wherein the pod (1), in particular the pod casing (2, 4), is self-supporting, and wherein the pod casing (2, 4) has a rotating part (4) which carries at least one rotor blade (56) of the aerodynamic rotor (106) and/or the rotor member (50) of the generator (46) and has a stationary part (2) carrying the stator (48) of the generator (46); wherein the rotating part (4) of the pod (1) is mounted on the stationary part (2) rotatably about a substantially horizontal axis by means of a rear bearing (70) and a front bearing (72),
**characterized in that**
- the stationary part (2) comprises a front cone portion (52), which is in particular walkable, and- a hub portion (80) for receiving the at least one rotor blade (56) is provided, wherein the hub portion (80) is mounted rotatably around the cone portion (52).

2. A pod (1) according to claim 1 **characterised in that** the pod casing (2, 4) carries the generator (46).

3. A pod (1) according to claim 1 or claim 2 **characterised in that** the pod casing (2, 4) substantially assumes the function of a machine carrier (902).

4. A pod (1) according to one of the preceding claims **characterised in that** the wind power installation (100) is gearless in such a way that the generator rotor member (50) is rotated without mechanical transmission by the aerodynamic rotor (106).

5. A pod (1) according to one of the preceding claims **characterised in that** the pod casing (2, 4), the rotating part (4) and/or the stationary part (2) is made entirely or partially from steel, in particular spheroidal graphite iron or aluminium.

6. A pod (1) according to one of the preceding claims **characterised in that** the generator (46) is in the form of an external rotor member.

7. A pod (1) according to one of the preceding claims **characterised by** a ring gear (20) fixedly connected to the pod (1) and having an internal tooth arrangement for azimuth adjustment of the pod (1), so adapted that at least one azimuth drive (16), in particular a plurality of azimuth drives (16) fixedly arranged in the pylon (12), engage with a respective pinion on the ring gear with the internal tooth arrangement.

8. A pod (1) according to one of the preceding claims **characterised by** a working platform (38) extending through the generator (46).

9. A pod (1) according to one of the preceding claims **characterised in that** the generator (46) has a nominal power output of over 1 MW.

10. A pod (1) according to one of the preceding claims **characterised in that** the pod (1) is accessible on foot.

11. A pod (1) according to one of the preceding claims **characterised in that** the generator (46) is in the form of a slowly rotating generator and/or in the form of a multi-pole generator having at least 48, at least 72, at least 96, in particular at least 192 stator poles.

12. A pod (1) according to one of the preceding claims **characterised in that** the pod casing (2, 4) has
- a shaft journal portion (1106) arranged in the region of the generator and the aerodynamic rotor for carrying the generator and the aerodynamic rotor, and
- a connecting portion connecting the shaft journal portion (1106) to the pylon and the connecting portion is of an outside shape which is angled or curved from the pylon to the shaft journal portion (1106), in particular being of a tubular shape which is angled or curved approximately through 90°.

13. A pod (1) according to one of the preceding claims **characterised in that** the rotating part (4) has blade connections (1187) for fixing a respective rotor blade to the rotating part (4) and the blade connections (1187) extend in the axial direction over a blade connecting region and the generator, in particular its rotor member (1150), is arranged in relation to the axial direction in said blade connecting region and/or the generator is arranged in relation to the axis of rotation in the radial direction within the blade connections.

14. A wind power installation (100) comprising a pylon (102) or mast and a pod (1) according to one of the preceding claims.

15. A wind power installation (100) according to claim 14 **characterised in that** at least one azimuth drive (16), in particular a plurality of azimuth drives (16), are fixedly arranged in the pylon (12) or mast and engage with a respective pinion (18) on a or the ring gear (20) which is fixedly connected to the pod (1) and has an internal tooth arrangement.

16. A method of constructing a wind power installation (100) according to claim 14 or 15, wherein generator rotor member (50) and stator (48) of the generator (46) are already connected together by means of a bearing before being lifted for installation on a pylon (12).

17. A method according to claim 16 wherein stator (48), generator rotor member (50) and at least one bearing connecting the stator (48) and the rotor member (50) are prefabricated at the factory and/or on the building site on the ground.

18. A method according to claim 16 or claim 17 wherein a wind power installation (100) according to claim 12 or claim 13 is constructed and/or electric devices are pre-installed in the pod (1).

## Revendications

1. Nacelle (1) d'une éolienne (100), dans laquelle l'éolienne (100) présente une tour (102) ou un mât, un rotor (106) aérodynamique et un générateur (46) avec un induit (50) et un stator, et la nacelle (1) est pourvue d'un habillage de nacelle (2, 4), dans laquelle la nacelle (1), en particulier l'habillage de nacelle (2, 4), est autoporteur, et dans laquelle l'habillage de nacelle (2, 4) présente une partie rotative (4), qui supporte au moins une pale de rotor (56) du rotor (106) aérodynamique et/ou l'induit (50) du générateur (46) et qui présente une partie immobile (2), qui supporte le stator (48) du générateur (46), dans laquelle la partie rotative (4) de la nacelle (1) est montée sur la partie immobile (2) de manière à pouvoir tourner autour d'un axe sensiblement horizontal au moyen d'un palier arrière (70) et d'un palier avant (72),
**caractérisée en ce que**
- la partie immobile (2) présente une section conique (52) avant, en particulier pouvant être empruntée, et
- une section de moyeu (80) est prévue pour recevoir l'au moins une pale de rotor (56), dans laquelle la section de moyeu (80) est montée de manière à pouvoir tourner autour de la section conique (52).

2. Nacelle (1) selon la revendication 1,
**caractérisée en ce que** l'habillage de nacelle (2, 4) supporte le générateur (46).

3. Nacelle (1) selon la revendication 1 ou 2,
**caractérisée en ce que** l'habillage de nacelle (2, 4) assure sensiblement la fonction d'un support de machine (902).

4. Nacelle (1) selon l'une quelconque des revendications précédentes,
**caractérisée en ce que** l'éolienne (100) est sans transmission de telle manière que l'induit (50) est tourné sans démultiplication mécanique par le rotor (106) aérodynamique.

5. Nacelle (1) selon l'une quelconque des revendications précédentes,
**caractérisée en ce que** l'habillage de nacelle (2, 4), la partie rotative (4) et/ou la partie immobile (2) sont fabriqués en totalité ou en partie à partir d'acier, en particulier à partir de fonte à graphite sphéroïdal ou d'aluminium.

6. Nacelle (1) selon l'une quelconque des revendications précédentes,
**caractérisée en ce que** le générateur (46) est réalisé sous la forme d'un induit extérieur.

7. Nacelle (1) selon l'une quelconque des revendications précédentes,
**caractérisée par** une couronne dentée (20) reliée de manière solidaire à la nacelle (1) avec une denture intérieure servant à l'ajustement azimutal de la nacelle (1), préparée afin qu'au moins un entraînement azimutal (16), en particulier plusieurs entraînements azimutaux (16), qui sont disposés de manière solidaire dans la tour (12), s'engagent avec respectivement un pignon au niveau de la couronne dentée avec une denture intérieure.

8. Nacelle (1) selon l'une quelconque des revendications précédentes,
**caractérisée par** une plate-forme de travail (38) s'étendant à travers le générateur (46).

9. Nacelle (1) selon l'une quelconque des revendications précédentes,
**caractérisée en ce que** le générateur (46) a une puissance nominale supérieure à 1 MW.

10. Nacelle (1) selon l'une quelconque des revendications précédentes,
**caractérisée en ce que** la nacelle (1) peut être empruntée.

11. Nacelle (1) selon l'une quelconque des revendications précédentes,
**caractérisée en ce que** le générateur (46) est réalisé sous la forme d'un générateur à rotation lente et/ou sous la forme d'un générateur à quatre pôles comprenant au moins 48, au moins 72, au moins 96, en particulier au moins 192 pôles du stator.

12. Nacelle (1) selon l'une quelconque des revendications précédentes,
**caractérisée en ce que** l'habillage de nacelle (2, 4)
- présente une section de tourillon axial (1106) disposé dans la zone du générateur et du rotor aérodynamique servant à supporter le générateur et le rotor aérodynamique, et
- présente une section de liaison reliant la section de tourillon axial (1106) à la tour, laquelle section de liaison présente une forme extérieure pliée ou coudée de la tour vers la section de tourillon axiale (1106), en particulier une forme tubulaire pliée ou coudée environ de 90°.

13. Nacelle (1) selon l'une quelconque des revendications précédentes,
**caractérisée en ce que** la partie rotative (4) présente des raccords de pale (1187) servant à fixer respectivement une pale de rotor au niveau de la partie rotative (4), et les raccords de pale (1187) s'étendent dans une direction axiale sur une zone de raccordement de pale, et le générateur, en particulier son induit (1150), est disposé dans ladite zone de raccordement de pale par rapport à la direction axiale, et/ou que le générateur est disposé à l'intérieur des raccords de pale par rapport à l'axe de rotation dans une direction radiale.

14. Eolienne (100) comprenant une tour (102) ou un mât et une nacelle (1) selon l'une quelconque des revendications précédentes.

15. Eolienne (100) selon la revendication 14,
**caractérisée en ce qu'**au moins un entraînement azimutal (16), en particulier plusieurs entraînements azimutaux (16), sont disposés de manière solidaire dans la tour (12) ou le mât et s'engagent avec respectivement un pignon (18) au niveau d'une couronne dentée (20) ou de la couronne dentée reliée de manière solidaire à la nacelle (1), présentant une denture intérieure.

16. Procédé servant à construire une éolienne (100) selon la revendication 14 ou 15, dans lequel l'induit (50) et le stator (48) du générateur (46) sont reliés les uns aux autres au moyen d'un palier déjà avant le soulèvement aux fins de l'installation sur une tour (12).

17. Procédé selon la revendication 16, dans lequel le stator (48), l'induit (50) et au moins un palier reliant le stator (48) et l'induit (50) sont préfabriqués en usine et/ou sur le site d'installation au sol.

18. Procédé selon la revendication 16 ou 17, dans lequel une éolienne (100) est construite selon la revendication 12 ou 13, et/ou des équipements électriques sont installés au préalable dans la nacelle (1).
